# EUROPÄISCHE PATENTSCHRIFT

(11) **EP 1 178 232 B1**
(45) Veröffentlichungstag und Bekanntmachung des Hinweises auf die Patenterteilung: **13.07.2011**
(21) Anmeldenummer: 01112014.4
(22) Anmeldetag: 23.05.2001
(51) Int. Cl.: F16D 3/38

(54) **Flanschmitnehmer für ein Kardangelenk und Gelenkwelle**
Driving flange for a cardan joint and articulated shaft
Elément entraineur à bride pour joint de cardan et arbre articulé

(30) Priorität: 01.08.2000 DE 10037866
(43) Veröffentlichungstag der Anmeldung: 06.02.2002
(73) Patentinhaber: Voith Turbo GmbH & Co. KG, 89522 Heidenheim (DE)
(72) Erfinder: Lindenthal, Hans, 89522 Heidenheim (DE); Rösle, Hans, 89522 Heidenheim (DE); Grawenhof, Peter, 89547 Dettingen (DE)
(74) Vertreter: Dr. Weitzel & Partner

(56) Entgegenhaltungen:
- DE-U- 9 315 717
- FR-A- 2 708 976
- US-A- 4 637 807

## Beschreibung

Die Erfindung betrifft einen Flanschmitnehmer für ein Kardangelenk einer Gelenkwelle, umfassend zwei Gelenkgabelhälften, im einzelnen mit den Merkmalen aus den Oberbegriffen der Ansprüche 1 und 5; ferner eine Gelenkwelle mit einem Flanschmitnehmer.

Ausführungsformen von Flanschmitnehmern in geteilter Form sind in einer Vielzahl von Ausführungen bekannt. Stellvertretend wird auf die nachfolgend genannten Druckschriften verwiesen:

| | |
|---|---|
| 1. | EP 02 06 026 A1 |
| 2. | DE 43 13 141 C2 |
| 3. | US 4,637,807 |

Geteilt ausgeführte Gelenkgabeln ermöglichen die Gestaltung einteiliger und formstabiler Lageraugen, die wie bei einer ungeteilten Gelenkgabel Bestandteil des angrenzenden Gabelarmes bleiben, über den die Kraftübertragung zum Lagerauge stattfindet. Auf diese Weise erfolgt keine Unterbrechung des Kraftlusses an den spezifisch höchst beanspruchten Stellen der Gelenkgabel. Die in der Symmetrieebene zwischen den Lageraugen und der Gelenkgabel angeordnete Trennstelle liegt im Bereich niedriger Beanspruchung, welcher keinerlei Einfluß auf die Kraftübertragung besitzt. Diese Anordnungen bieten den Vorteil einer guten Einbettung der Lagerung im Lagerauge und einer sehr leichten Montierbarkeit sowie einer Erhöhung der Lagertragfähigkeit. Gleichzeitig bilden geteilt ausgeführte Gelenkgabeln wesentliche Vorteile bei der Herstellung, Bearbeitung, dem Transport und der Lagerung. Bei der in der EP 02 06 026 A1 beschriebenen Ausführung weisen die Gelenkgabelhälften jeweils einen Flansch auf, der an seiner, von der Zapfenkreuzachse weggerichteten Seite Formschlußelemente aufweist, so daß mit der angetriebenen beziehungsweise der anzutreibenden Welle eine formschlüssige Verbindung eingegangen wird. Zusätzlich sind lösbare Verbindungen zwischen dem Flansch und der jeweiligen Welle vorgesehen, beispielsweise mittels Dehnschrauben. Die Trennflächen der Gelenkgabelhälften sind im wesentlichen parallel zueinander angeordnet und weisen im mittleren Bereich einander gegenüberstehende Keilnuten auf. In diesen Keilnuten sind Keile viereckiger Form eingelassen. Diese dienen vor allem der Verhinderung der Verschiebung der einzelnen Gelenkgabelhälften gegeneinander parallel zur Zapfenachse des jeweils in der Gelenkgabel gelagerten Zapfens. Eine Vermeidung der Relativbewegung der Gelenkgabelhälften senkrecht zur Zapfenachse ist mit dieser Lösung nicht realisierbar, auch können die Gelenkgabelhälften nicht gegeneinander vorgespannt werden. Die Folge davon ist ein vor allem im Reversierbetrieb auftretendes Abheben einzelner Bereiche der Gelenkgabelhälften unter dem Einfluß der Umfangskraft. Das Abheben bewirkt auch eine Relativbewegung der Formschlußelemente gegen die Aussparungen an der anschließenden Welle, was wiederum zum Entstehen von Hohlräumen führt, in denen sich Feuchtigkeit und Kriechwasser ansammeln kann. Die Folge sind Korrosionserscheinungen, die durch die Mikrobewegungen der Gelenkgabelhälften noch forciert werden.

Zur Lösung dieser Problematik schlägt die Lösung gemäß der DE 43 13 141 C2 eine Ausführung mit Hirth-Stirn-Verzahnung an der Flanschunterseite sowie einer Verzahnung im Bereich der Trennflächen zur Realisierung einer formschlüssigen Verbindung zwischen beiden Gelenkgabelhälften vor. Die Verzahnung, welche vorzugsweise als gerade Stirnverzahnung mit schrägen Flanken ausgeführt ist, ist derart gestaltet, daß bei Verlängerung der Flankenlinie der Verzahnung oder bei gewählter Bogenverzahnung der Sekante durch beide Endpunkte der Flankenlinie einen Winkel von > 0 Grad bis < 180 Grad mit einer Ebene, die von der Gelenkgabelachse und der Zapfenachse aufgespannt wird, bildet. Die Gelenkgabelachse liegt in der Regel in der Symmetrieebene zwischen den beiden Gelenkgabelhälften und steht senkrecht zur Zapfenachse des in dieser Gelenkgabel gelagerten Zapfens. Unter Gelenkgabelachse wird dabei die Rotationsachse verstanden, welche mit der Rotationsachse einer Gelenkwelle zusammenfällt. Durch die Vorspannung der Flanken wird eine Relativbewegung zwischen den Gelenkgabelhälften senkrecht zur Zapfenachse nahezu ausgeschlossen. Allerdings wurden bei dieser Ausführung nach längerer Betriebsdauer kleine Risse am Zahngrund beobachtet. Insbesondere bei Ausführungen von Flanschmitnehmern mit geschlossenem Gabelauge, das heißt integrierter Blindbohrung zur Aufnahme der Lageranordnung für das Zapfenkreuz treten diese Schädigungen im besonderen Maße auf.

Der Erfindung liegt daher die Aufgabe zugrunde, einen Flanschmitnehmer der eingangs genannten Art derart weiterzuentwickeln, daß Relativbewegungen der Gelenkgabelhälften parallel zur Gelenkgabelachse nahezu ausgeschlossen werden und gleichzeitig Beschädigungen der einzelnen Elemente des Flanschmitnehmers, insbesondere an den Gelenkgabelhälften vermieden werden. Der Flanschmitnehmer soll des weiteren eine günstige Gestaltung zur Aufnahme der Lagerung und zur Realisierung möglichst hoher Lagerkräfte aufweisen sowie durch eine kostengünstige Fertigung unter effektiver Ausnutzung der vorhandenen Kapazitäten und-leichte Montierbarkeit charakterisiert sein.

Die erfindungsgemäße Lösung ist durch die Merkmale der Ansprüche 1 und 5 charakterisiert. Vorteilhafte Ausgestaltungen sind in den Unteransprüchen beschrieben.

Bei der ersten Lösung umfaßt der Flanschmitnehmer zwei zueinander komplementäre Gelenkgabelhälften, die entlang einer zur Zapfenachse eines von der Gelenkgabel gestützten Zapfens des Zapfenkreuzes im wesentlichen senkrecht stehenden Koppelfläche zusammenstoßen. Unter zueinander komplementären Gelenkgabelhälften ist zu verstehen, daß diese sich zu einer Baueinheit - der Gelenkgabel, welche in Funktion der Kopplung mit einem Wellenstrang als Flanschmitnehmer fungiert - ergänzen können. Jede Gelenkgabelhälfte umfaßt einen Fußteil und einen Lagerteil. Beide Gelenkgabelhälften sind im Bereich ihres Fußteiles formschlüssig miteinander unter Bildung eines Flanschteiles aus den einzelnen Fußteilen verbindbar. Die Fußteile der Gelenkgabelhälften weisen an ihrer zum Fußteil der jeweils anderen Gelenkgabelhälfte weisenden Koppelfläche im Bereich des Außenumfanges eine zueinander komplementäre erste Verzahnung auf, wobei die Verlängerung einer Flankenlinie der Verzahnung an der Koppelfläche oder einer Mehrzahl von Flankenlinien oder - bei Ausführung der Verzahnung in Form einer Bogenverzahnung - die Verlängerung der Sekante durch die Endpunkte einer Flankenlinie bzw. die Verlängerungen einer Vielzahl von Sekanten einen Winkel zwischen > 0 Grad bis < 180 Grad mit einer Ebene bilden, welche durch die Zapfenachse des in einer Gelenkgabelhälfte gelagerten Zapfens und einer mit einer Rotationsachse der Gelenkgabel zusammenfallenden Gelenkgabelachse gebildet wird. Diese erste Verzahnung ist demzufolge derart ausgerichtet, daß diese jede Lage gegenüber der Gelenkgabelachse einnehmen kann, ausgenommen jedoch der parallelen Lage zur Gelenkgabelachse. Im wesentlichen können zwei Fälle unterschieden werden:
1) Die Flankenlinien der Verzahnung bzw. deren Verlängerung oder bei Ausführung als Bogenverzahnung die Sekanten durch die Endpunkte der Flankenlinien bzw. deren Verlängerungen verlaufen geneigt zu einer Ebene, die von der Gelenkgabelachse und einer Zapfenachse eines in der Gelenkgabel gelagerten Zapfens gebildet wird.
2) Die Flankenlinien der Verzahnung bzw. deren Verlängerung oder bei Ausführung als Bogenverzahnung die Sekanten durch die Endpunkte der Flankenlinien bzw. deren Verlängerungen sind parallel zu dieser von der Gelenkgabelachse und des in der Zapfenachse des in der Gelenkgabel gelagerten Zapfens gebildeten Ebene, ausgenommen jedoch ist auch hier der parallele Verlauf der ersten Verzahnung zur Gelenkgabelachse

In beiden Fällen schneiden bei Projizierung der Flankenlinien oder der Tangenten an die Flankenlinien und der Gelenkgabelachse in eine gemeinsame Ebene die Flankenlinie bzw. deren Verlängerung oder die Tangenten die Gelenkgabelachse einmal.

Erfindungsgemäß ist die erste Verzahnung nur im radial außen liegenden Bereich der Koppelfläche bezogen auf die Gelenkgabelachse angeordnet und es ist zusätzlich eine weitere zweite Verzahnung in den stärker beanspruchten Bereichen der Gelenkgabelhälften vorgesehen, die dadurch charakterisiert ist, daß die Verlängerungen einer oder mehrerer Flankenlinien der zweiten Verzahnung oder - bei Ausführung als Bogenverzahnung - die Verlängerungen einer Sekante durch die Endpunkte einer Flankenlinie der zweiten Verzahnung in einem Winkel zwischen einschließlich 70 Grad und 110 Grad zur Verlängerung einer Flankenlinie der ersten Verzahnung oder bei Bogenverzahnung zur Verlängerung einer Sekante durch die Endpunkte einer Flankenlinie der ersten Verzahnung angeordnet sind. Vorzugsweise sind die Verlängerungen der Flankenlinien der zweiten Verzahnung bzw. bei Bogenverzahnung der Sekanten durch die Endpunkte der Flankenlinie im wesentlichen senkrecht zu den Flankenlinien der ersten Verzahnung bzw. den Sekanten ausgerichtet. Die Verzahnung ist dabei einstückig mit der jeweiligen Gabelhälfte ausgebildet und weist eine Mehrzahl von komplementären Zähnen auf. Ferner sind Mittel zur Verspannung der beiden Gelenkgabelhälften gegeneinander vorgesehen.

Durch das Vorsehen zweier, in einem Winkel zueinander ausgerichteter Verzahnungen an der Koppelfläche der beiden Gelenkgabelhälften, wird eine formschlüssige und in axialer Richtung in Einbaulage in einem Wellenstrang, insbesondere einer Gelenkwelle betrachtet, selbstzentrierende Verbindung zwischen den Gelenkgabelhälften geschaffen, mittels welcher auch sehr hohe Kräfte ohne Beschädigungen der Einzelverzahnungen kompensiert werden können. Dies bedeutet, dass eine Bewegung im wesentlichen parallel zu einer Ebene, welche durch die Gelenkgabelachse und die senkrecht zur Zapfenachse des in der Gelenkgabel gelagerten Zapfens ausgerichtete Zapfenachse der anderen Zapfen eines Zapfenkreuzes gebildet wird, nahezu ausgeschlossen ist. Durch die Vorspannung der Flanken wird eine Relativbewegung zwischen den Gelenkgabelhälften senkrecht zur Zapfenachse, d.h. in Richtung der Gelenkgabelachse ausgeschlossen. Durch die formschlüssige Verbindung an den Koppelflächen der Gelenkgabelhälften werden die einander in einer Hälfte des Anschlußteiles gegenüberliegenden Zug- und Druckbeanspruchungen im Anschlußteil gegeneinander ausgeglichen, d.h. über den gesamten Querschnitt des Anschlußteiles wird eine gleiche Lastverteilung erreicht. Mikrobewegungen in der Kopplung zwischen dem Anschlußteil und dem Flanschmitnehmer in der Verbindung mit der anschließenden Welle werden vermieden und damit auch das Entstehen von Hohlräumen, in denen sich Kriechwasser u.ä. ansammeln könnte. Die durch die Relativbewegung bedingte zusätzliche mechanische Beanspruchung, die zu einer Forcierung des Korrosionseffektes an den Kontaktstellen führt, wird damit ebenfalls ausgeschlossen.

Die Ausführung der ersten Verzahnung kann beispielsweise als Stirnverzahnung oder Bogenverzahnung erfolgen. Dies gilt in Analogie auch für die zweite Verzahnung. Vorzugsweise ist die zweite Verzahnung als gerade Stirnverzahnung mit einem Flankenwinkel zwischen einschließlich 10 und 60 Grad ausgeführt.

Bezüglich der Auslegung der zweiten Verzahnung an den Koppelflächen wird vorzugsweise eine Verzahnung mit einer Teilung im Bereich von einschließlich 8 bis einschließlich 20 bezogen auf den Rotationsdurchmesser eines mit dem Flanschmitnehmer gekoppelten Wellenstranges zwischen einschließlich 500 bis 1000 cm gewählt, um ein möglichst gutes Tragbild zu erhalten.

Vorzugsweise sind beide Gelenkgabelhälften im wesentlichen symmetrisch aufgebaut. In diesem Fall ist die Koppelfläche einer jeden Gelenkgabelhälfte durch eine Ebene beschreibbar. Es besteht jedoch auch die Möglichkeit einer unsymmetrischen Gestaltung der Fußteile beider Gelenkgabelhälften, d.h. die Koppelfläche besteht aus Teilflächen, welche in unterschiedlichen Ebenen angeordnet sind. In diesem Fall kann beispielsweise eine der beiden Gelenkgabelhälften eine Aussparung aufweisen, während die andere Gelenkgabelhälfte die dazu komplementäre Überlappung besitzt, wodurch die Lage beider Gelenkgabelhälften zueinander genau definiert ist. Die Verzahnungen können dann in den von den Überlappungen und Ausnehmungen gebildeten Bereichen der Koppelfläche angeordnet sein.

Aufgrund der an der von der Zapfenachse weggerichteten Flanschunterseite angebrachten Mittel zur kraft- und/oder formschlüssigen Verbindung zum Zwecke der Drehmomentenübertragung und Zentrierung mit dazu komplementär ausgeführten Mitteln an den Anschlußelementen, welche vorzugsweise als Hirth-Stirnverzahnung, deren Flankenlinien sich bezogen auf die Gelenkgabelachse in radialer Richtung erstrecken, ausgeführt-sind und zusätzlichen Schraubverbindungen zwischen Flanschmitnehmer und Anschlußteil wird mit der anschließenden Welle bzw, dem Anschlußteil zusätzlich eine selbstzentrierende und kraftschlüssige Verbindung eingegangen. Diese verhindert die Relativbewegung der Gelenkgabelhälften gegeneinander parallel zur Zapfenachse des in dieser Gelenkgabel gelagerten Zapfens bzw. senkrecht zur Gelenkgabelachse.

Vorzugsweise liegt die Gelenkgabelachse in der Symmetrieebene zwischen den beiden Gelenkgabelhälften und steht senkrecht zur Zapfenachse des in dieser Gelenkgabel gelagerten Zapfens. Die Symmetrie der beiden Gelenkgabelhälften ist fertigungstechnisch sehr leicht zu realisieren, jedoch nicht zwingend. Vorzugsweise ist die Verzahnung derart ausgeführt, daß die Flankenlinien bzw. deren Verlängerung bei Projizierung in eine Ebene mit der Gelenkgabelachse senkrecht zur Gelenkgabelachse verlaufen und senkrecht zu einer Ebene, die von der Gelenkgabelachse und einer Zapfenachse eines in der Gelenkgabel gelagerten Zapfens gebildet wird. Vorzugsweise wird man die Verzahnung an den Trennflächen in der gleichen Verzahnungsgröße wie die Hirthstirnverzahnung an der Unterseite des Flanschmitnehmers vorsehen. Damit wird die Möglichkeit geschaffen, bereits vorhandene Werkzeuge effektiver ausnutzen zu können.

Die zur Lösung der Aufgabe zweite Möglichkeit besteht darin, vor der Teilung des Flanschmitnehmers in den gering beanspruchten Bereichen der Fußteile ein Segment herauszutrennen, und an den einander komplementären Trennflächen von Segment und Gelenkgabelhälften eine entsprechende erste Verzahnung, wie bereits beschrieben, vorzusehen. Die Anordnung der zweiten Verzahnung erfolgt analog.

Die erfindungsgemäße Lösung soll nachfolgend anhand von Figuren erläutert werden. Es zeigen:
- Fig. 1a: eine Ausführung zweier Gelenkgabelhälften eines erfindungsgemäen Flanschmitnehmers in Kavalierperspektive mit gerader Stirnverzahnung;
- Fig. 1b: eine Ausführung eines Flanschmitnehmers im montierten Zustand aus zwei erfindungsgemäß gestalteten Gelenkgabelhälften;
- Fig. 2: den Einfluß der Umfangskraft auf die Gelenkgabelhälften (nichtmaßstäblich und zur Verdeutlichung stark überzeichnet) einer gemäß dem Stand der Technik ausgeführten Gelenkgabel in verschiedenen Ansichten;
- Fig. 3: eine weitere erfindungsgemäße Ausgestaltung einer Gelenkgabelhälfte eines Flanschmitnehmers;
- Fig. 4: eine Ausgestaltung einer Gelenkgabelhälfte mit einer Bogenverzahnung an der Koppelfläche im Bereich des Außenumfanges des Fußteiles;
- Fig. 5: einen erfindungsgemäßen Flanschmitnehmer mit Segmentteilen.

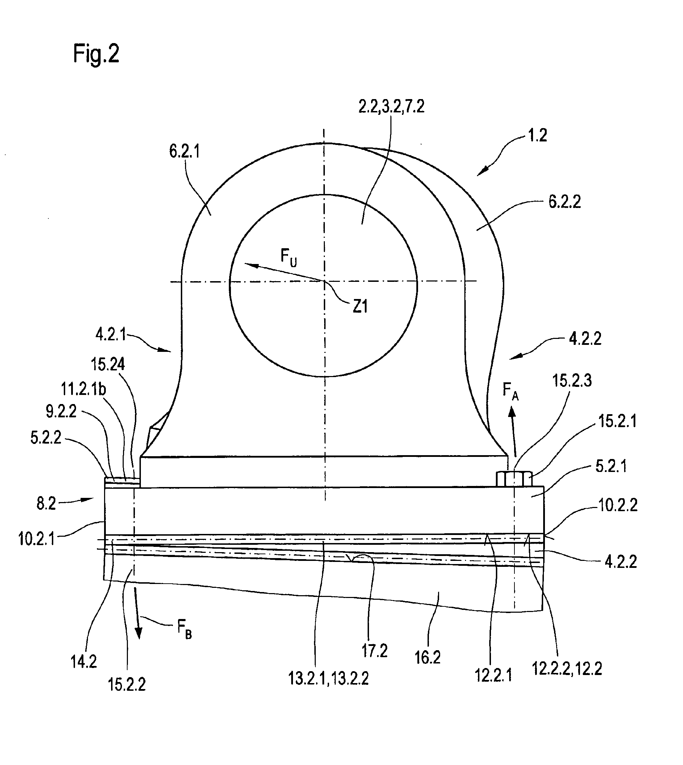

Die Figur 2 verdeutlicht stark übertrieben gemäß dem Stand der Technik in einer Ansicht von vorn auf einen in Form einer Gelenkgabel ausgebildeten Flanschmitnehmer 1.2 die Wirkung der Umfangskraft F_{U}, welche bei der Übertragung eines Drehmomentes an den im Flanschmitnehmer 1.2 gelagerten Zapfen 2.2 und 3.2 angreift, auf die zwei Gelenkgabelhälften 4.2.1 und 4.2.2 des Flanschmitnehmers. Beide Gelenkgabelhälften 4.2.1 und 4.2.2 umfassen jeweils einen Fußteil 5.2.1 beziehungsweise 5.2.2 und einen Lagerteil 6.2.1 beziehungsweise 6.2.2 zur Lagerung der Zapfen 2.2 beziehungsweise 3.2 eines Zapfenkreuzes 7.2. Beide Gelenkgabelhälften 4.2.1 und 4.2.2 sind im Bereich ihres Fußteiles formschlüssig miteinander unter Bildung eines Flanschteiles 8.2 verbunden. Der Formschluß wird durch die entsprechende Ausgestaltung der zueinander weisenden und hier nur zum Teil dargestellten Koppelflächen 9.2.1 und 9.2.2 an den Fußteilen 5.2.1 beziehungsweise 5.2.2 realisiert. Dazu weisen die einzelnen Fußteile, der Fußteil 5.2.1 der ersten Gelenkgabelhälfte 4.2.1 und 5.2.2 der zweiten Gelenkgabelhälfte 4.2.2 an ihrer zum Fußteil der jeweils anderen Gelenkgabelhälfte 4.2.2 beziehungsweise 4.2.1 weisenden Koppelfläche 9.2.2 beziehungsweise 9.2.1 im Bereich des jeweiligen Außenumfanges 10.2.1 beziehungsweise 10.2.2 eine zueinander komplementäre Verzahnung, umfassend die Teilverzahnungen 11.2.1b und hier nicht dargestellt 11.2.1a beziehungsweise 11.2.2a und 11.2.2b auf. Diese Verzahnungen 11.2.1a und 11.2.1b beziehungsweise die dazu komplementären Verzahnungen 11.2.2a und 11.2.2b erstrecken sich jeweils vom Außenumfang 10.2.1 beziehungsweise 10.2.2 der einzelnen Gelenkgabelhälfte in Richtung zur Gelenkgabelachse (G), unter welcher die Rotationsachse des
Flanschmitnehmers 1.2 verstanden wird. Die Erstreckung erfolgt dabei jeweils über einen Teilbereich der Koppelflächen 9.2.1 beziehungsweise 9.2.2. Die Verzahnungen 11.2.1a beziehungsweise 11.2.1b und 11.2.2a beziehungsweise 11.2.2b sind bei Ausbildung als Stirnverzahnung derart ausgeführt, daß die Verlängerung einer Flankenlinie der Verzahnung oder bei Ausbildung als Bogenverzahnung - die Verlängerung der Sekante durch die Endpunkte der Flankenlinie eines Verzahnungselementes der Verzahnung - einen Winkel von größer als 0 Grad bis kleiner 180 Grad mit einer Ebene, welche durch die Zapfenachse Z1 des in einer Gelenkgabelhälfte 4.2.1 gelagerten Zapfens 2.2 und einer mit einer Rotationsachse des Flanschmitnehmers 1.2. zusammenfallenden Gelenkgabelachse (G) gebildet wird, einnimmt. Der Flanschmitnehmer 1.2, insbesondere die beiden Gelenkgabelhälten 4.2.1 und 4.2.2 weisen an der vom Lagerteil 6.2.1 beziehungsweise 6.2.2 abgewandten Stirnseite 12.2.1 beziehungsweise 12.2.2 Mittel 13.2.1 beziehungsweise 13.2.2 zur Realisierung einer form- und/oder kraftschlüssigen Verbindung zur Realisierung der Drehmomentübertragung und Zentrierung des Flanschmitnehmers 1.2 in der Verbindungsebene mit einem Anschlußelement, insbesondere in Form eines Wellenstranges 16.2 auf. Die Mittel umfassen dabei eine auf der von den Lagerteilen 6.2.1 beziehungsweise 6.2.2 weggerichteten Stirnseite 12.2.1 beziehungsweise 12.2.2 unter Bildung der Gesamtstirnseite 12.2 des Flanschmitnehmers 1.2 angebrachte, axial ausgerichtete und radial an der Flanschunterseite angeordnete Hirth-Stirn-Verzahnung 14.2. Unter Hirth-Stirn-Verzahnung wird dabei eine Verzahnung verstanden, bei welcher die geometrischen Linien der einzelnen Verzahnungselemente sich in einem gemeinsamen Punkt M treffen. Dabei differiert die Verzahnungshöhe vom Mittelpunkt M aus betrachtet, welcher auf der Gelenkgabelachse G liegt bis zum Außenumfang 10.2.1 beziehungsweise 10.2.2 der einzelnen Fußteile 5.2.1 beziehungsweise 5.2.2 des Flanschmitnehmers 1.2. Die Sicherung in axialer Richtung erfolgt über Schraubverbindungen 15.2, hier 15.2.1, 15.2.2 beziehungsweise 15.2.3, 15.2.4 an der gegenüberliegenden Gelenkgabelhälfte zwischen dem Flanschmitnehmer 1.2 und dem entsprechenden Anschlußelement in Form eines Wellenstranges 16.2. An dessen zum Flanschmitnehmer 1.2 ausgerichteten Stirnseite 17.2 ist eine zur Hirth-Stirn-Verzahnung 14.2 an der Stirnseite 12.2.1 beziehungsweise 12.2.2 des Flanschmitnehmers 1.2 komplementär ausgeführte Hirth-Stirn-Verzahnung angeordnet. Die beiden komplementär zueinander ausgeführten Hirth-Stirn-Verzahnungen 14.2 an der Flanschunterseite 12.2 des Flanschmitnehmers 1.2 und der zum Flanschmitnehmer 1.2 ausgerichteten Stirnseite 17.2 des Anschlußelementes in Form des Wellenstranges 16.2 bilden bei entsprechender Vorspannung über die Schraubverbindungen 15.2 eine selbst zentrierende Verbindung.

Eine aufgrund des zu übertragenden Drehmomentes an der Gelenkgabel angreifende Umfangskraft F_{U} bewirkt im Zusammenhang mit einer hier nicht dargestellten Verformung der Gelenkgabelhälften eine entsprechende Kraftwirkung auf die Flanken der Verzahnungen 11.2.1a beziehungsweise 11.2.1b und 11.2.2a beziehungsweise 11.2.2b, welche bei entsprechender Höhe der Kraft zu Beschädigungen und einem Ausfressen im Bereich einzelner Verzahnungselemente der Verzahnungen führt. Die Wirkung der Umfangskraft F_{U} führt des weiteren zu unterschiedlich gerichteten Kräften, die an den einzelnen Schraubverbindungen 15.2.1, 15.2.2, 15.2.3, 15.2.4 wirksam werden und damit zu unterschiedlichen Beanspruchungen der Verbindung zwischen dem Flanschmitnehmer 1.2 und dem Anschlußelement in Form des Wellenstranges 16.2. Diese können bei Auftreten von größeren Beschädigungen an den Verzahnungen 11.2.1 beziehungsweise 11.2.1 und 11.2.2 beziehungsweise 11.2.2 zu einem Spiel zwischen den beiden Verzahnungen und zu Microrelativbewegungen zwischen den Verzahnungen an der Flanschunterseite, das heißt an den von den Lagerteilen 6.2.1 und 6.2.2 weggerichteten Stirnflächen 12.2.1 beziehungsweise 12.2.2 der Fußteile 5.2.1 beziehungsweise 5.2.2 und an der zum Flanschmitnehmer 1.2 ausgerichteten Stirnseite 17.2 führen. Diese Relativbewegungen bedingen das Entstehen beziehungsweise Vergrößern kleinerer Hohlräume zwischen den Flanken der ineinander greifenden Zähne, das heißt der einzelnen Verzahnungselemente der an den Koppelflächen 9.2.1 beziehungsweise 9.2.2 zueinander komplementär ausgeführten Verzahnungen 11.2.1, 11.2.1 beziehungsweise 11.2.2 beziehungsweise 11.2.2 und der zueinander komplementären Verzahnungen am Wellenstrang 16.2 und der Unterseite des Flanschmitnehmers 1.2, welche von den einzelnen Stirnseiten 12.2.1 beziehungsweise 12.2.2 der Fußteile 5.2.1 beziehungsweise 5.2.2 der Gelenkgabelhälften 4.2.1 beziehungsweise 4.2.2 unter Bildung der Gesamtstirnfläche 12.2, gebildet wird. In diesen Hohlräumen besteht die Möglichkeit der Ansammlung von Feuchtigkeit und Kriechwasser, welche wiederum zu Korrosion führen kann. Der Korrosionseffekt wird durch die Bewegung an den Kontaktstellen der einzelnen Verzahnungen miteinander noch zusätzlich verstärkt.

Im hier dargestellten Beispiel bewirkt die Umfangskraft F_{U} in der Gelenkgabelhälfte 4.2.1 ein Moment M, das sich im Wirken einer Kraft F_{A} an der Schraubverbindung 15.2.1, die der Vorspannkraft der Schrauben gleichgerichtet ist, und einer Kraft F_{B} an der Schraubverbindung 15.2.2, die der Vorspannkraft entgegengerichtet ist, äußert. Die Schraubverbindung 15.2.1 wird auf Zug beansprucht. Die Zugkraft addiert sich hier zur Vorspannkraft. Gleichzeitig wird das Anschlußteil im Bereich der Schraubverbindung ebenfalls zur Beanspruchung hin ausgesetzt. Die Schraubverbindung 15.2.2 wird entlastet, da die Kraft F_{B} als Druckkraft wirksam wird und der Vorspannkraft entgegengerichtet ist. Im Bereich der Schraubverbindung 15.2.2 wird das Anschlußteil, das heißt der Wellenstrang 16.2 und die dort vorherrschende Hirth-Stirn-Verzahnung auf Druck beansprucht. Die Verzahnung auf der Seite der Schraubverbindung 15.2.2 ist entlastet, das heißt, diese Hälfte der Gelenkgabelhälfte 4.2.1 fungiert als Passivseite; die Verzahnung im Bereich der Schraubverbindung 15.2.1 wird belastet, weshalb diese Seite der Gelenkgabelhälfte 4.2.1 als Aktivseite bezeichnet wird. Analog dazu verhalten sich die Kräfte F_{A}, und F_{B}, an der gegenüberliegenden komplementären Gelenkgabelhälfte 4.2.2. Es stehen sich jedoch immer an den zueinanderweisenden Teilen der Gelenkgabelhälften Zug- und Rückbeanspruchung gegenüber.

Bei gleichbleibender Betriebsart, das heißt ohne Reversierbetrieb, findet kein Wechsel zwischen Passiv- und Aktivseite statt. Das bedeutet, daß die einzelnen Seiten der Gelenkgabelhälften 4.2.1 und 4.2.2 immer der gleichen Beanspruchung ausgesetzt sind, damit immer die gleichen Bereiche des Anschlußteiles in Form des Wellenstranges 16.2 Zug- beziehungsweise Druckbeanspruchungen ausgesetzt werden, was die Beanspruchungen der Koppelverzahnungen ebenfalls noch verstärkt.

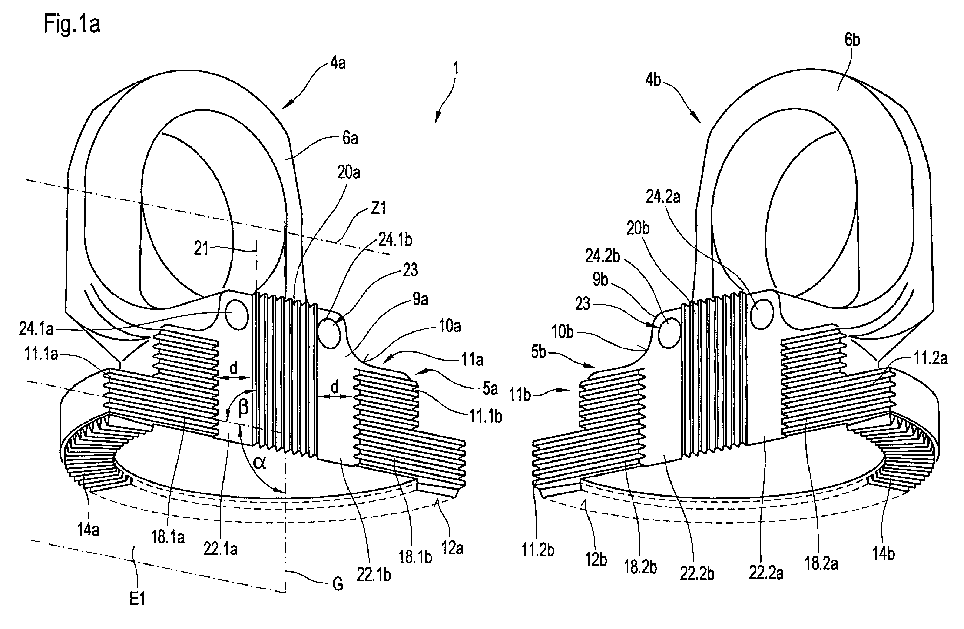

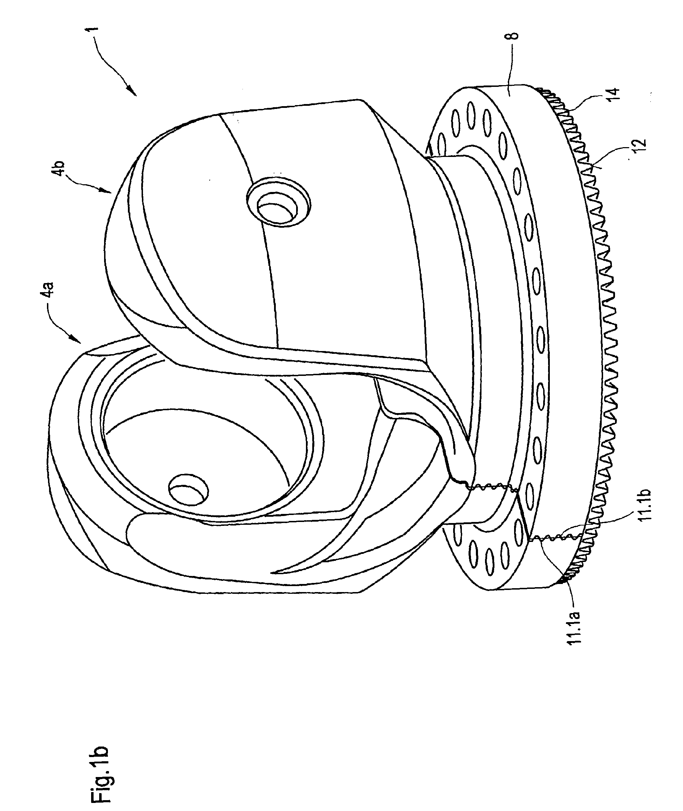

Die Figur 1 verdeutlicht in einer Perspektivansicht zwei einen erfindungsgemäß gestalteten Flanschmitnehmer 1 bildende Gelenkgabelhälften 4a und 4b. Diese umfassen jeweils einen Fußteil 5a und 5b und einen Lagerteil 6a und 6b zur Aufnahme der Lageranordnung des in der auf beiden Gelenkgabelhälften 4a und 4b gebildeten Gelenkgabel beziehungsweise Flanschmitnehmer gelagerten Zapfens eines Zapfenkreuzes. Der Fußteil 5a beziehungsweise 5b einer Gelenkgabelhälfte 4a beziehungsweise 4b kann vielgestaltig ausgeführt sein. Denkbar sind Ausführungen mit gleichmäßigem Übergang zwischen dem Lagerteil 6a beziehungsweise 6b zum Fußteil und Ausführung des Fußteils 5a beziehungsweise 5b mit unveränderlichen Querschnittsabmaßen. Im dargestellten Fall ist der Fußteil 5a beziehungsweise 5b in Bereiche unterschiedlicher Querschnittsabmessungen unterteilt. Der Bereich der größten Abmessung bildet dabei auch die einzelnen, die Stirnseite 12 bildenden Stirnseiten 12a beziehungsweise 12b, welche vom jeweiligen Lagerteil weggerichtet sind und die die zur Drehmomentübertragung erforderliche Hirth-Stirn-Verzahnung 14a beziehungsweise 14b tragen. Im Bereich des Außenumfanges 10a beziehungsweise 10b des Fußteiles 5a beziehungsweise 5b ist an den jeweils zueinander weisenden Koppelflächen 9a beziehungsweise 9b eine komplementär zur Verzahnung an der jeweils anderen Gelenkgabelhälfte 4a beziehungsweise 4b ausgerichtete erste Verzahnung 11 a beziehungsweise 11b angeordnet. Die weist zwei Teilverzahnungen 11.1 a, 11.1b beziehungsweise 11.2a, 11.2b auf. Die einzelnen Teilverzahnungen 11.1a und 11.1b beziehungsweise 11.2a und 11.2b erstrecken sich dabei vom Bereich des Außenumfanges 10a beziehungsweise 10b des Fußteiles 5a beziehungsweise 5b in Richtung der in Einbaulage mit der Rotationsachse der Gelenkgabel, das heißt des Flanschmitnehmers 1 zusammenfallenden Gelenkgabelachse G über jeweils einen Teilbereich 18.1a beziehungsweise 18.1b der Koppelfläche 9a und 18.2a beziehungsweise 18.2b der Koppelfläche 9b. Die einzelnen Verzahnungen 11.1a, 11.1b, 11.2a, 11.2b sind im dargestellten Fall als gerade Stirnverzahnung ausgeführt, deren verlängerte Flankenlinien, hier stellvertretend die Flankenlinien 19 im wesentlichen senkrecht zu einer Ebene, welche von der Zapfenachse Z1 des in der Gelenkgabelhälfte, hier der Gelenkgabelhälfte 4a gelagerten Zapfens und der Gelenkgabelachse G gebildet wird, verlaufen. Denkbar ist jedoch auch ein Winkelbereich für den Winkel α von > 0 Grad bis < 180 Grad zwischen der Verlängerung der Flankenlinie 19 einer Verzahnung mit der Ebene E1, welche von der Zapfenachse Z1 und der Gelenkgabelachse G aufgespannt wird. Bei der hier nicht dargestellten Ausführung als Bogenverzahnung ist die Ausrichtung der Verzahnung durch die Verlängerung der Sekante durch die Endpunkte der einzelnen Flankenlinie beschreibbar. Diese bildet ebenfalls einen Winkel von > 0 Grad bis < 180 Grad mit der Ebene E1, welche durch die Zapfenachse Z1 des in der Gelenkgabelhälfte 4a gelagerten Zapfens Z1 und einer mit der Rotationsachse der Gelenkgabel, das heißt des Flanschmitnehmers 1 zusammenfallenden Gelenkgabelachse G gebildet wird. Erfindungsgemäß ist des weiteren vorgesehen, im Bereich der Gelenkgabelachse G an der Koppelfläche 9a beziehungsweise 9b beziehungsweise bei nicht Verlaufen der Gelenkgabelachse G durch die Koppelfläche 9a beziehungsweise 9b, das heißt im Falle paralleler Anordnung zwischen Gelenkgabelachse G und wenigstens eines Teilbereiches der Koppelfläche 9a beziehungsweise 9b bei Projizierung in eine gemeinsame Ebene ist eine zweite Verzahnung 20a beziehungsweise 20b vorgesehen, deren Flankenlinien beziehungsweise Verlängerung der einzelnen Flankenlinien, hier stellvertretend der Flankenlinie 21 bei Ausbildung als gerade Stirnverzahnung einen Winkel β zur Verlängerung der Flankenlinie 19 der einen Teilverzahnung, hier der ersten Teilverzahnung 11.1a der ersten Verzahnung im Bereich zwischen einschließlich 70 und 110 Grad einnimmt, während die Flankenlinie an die jeweilige zweite Teilverzahnung, hier 11.1b, einen Winkel von 110 Grad bis 69 Grad einnimmt. Vorzugsweise wird eine senkrechte Ausrichtung der Flankenlinie 21 der Verzahnung 20a beziehungsweise der entsprechenden Flankenlinie der Verzahnung 20b zu den Flankenlinien der Verzahnung 11.2b beziehungsweise 11.2a gewählt.

Vorzugsweise erfolgt die Anordnung der Verzahnung 20a beziehungsweise 20b im Bereich der Gelenkgabelachse G, das heißt im Mittenbereich der Koppelfläche 9a beziehungsweise 9b. Die Erstreckung der Verzahnung kann dabei bis in den Endbereich der vorzugsweise im wesentlichen senkrecht zu dieser ausgerichteten Verzahnungen 11.1a beziehungsweise 11.1 b und für die Gelenkgabelhälfte 4b 11.2a beziehungsweise 11.2b erfolgen. Vorzugsweise wird jedoch ein Abstand d zwischen den zueinander in einem bestimmten Winkel ausgerichteten Verzahnungen vorgesehen. Vorzugsweise wird bei einer Ausführung gemäß der Figur 1a der Abstand d beidseitig zwischen Verzahnung 20a und den im Bereich des Außenumfanges 10a des Fußteiles 5a angeordneten Verzahnungen 11.1a und 11.1b gleich gewählt. Denkbar sind jedoch auch hier nicht dargestellt unsymmetrische Ausführungen.

Die durch den Abstand d beschreibbaren Zwischenbereiche an den Koppelflächen 9a beziehungsweise 9b beschreiben somit Teilflächen, im dargestellten Fall 22.1a und 22.1b für die Gelenkgabelhälfte 4a und 22.2a beziehungsweise 22.2b für die Gelenkgabelhälfte 4b, welche frei von einer Verzahnung sind. In diesen Bereichen werden vorzugsweise die Mittel 23 zur Verspannung der beiden Gelenkgabelhälften angeordnet. Die Verspannung erfolgt in der Regel mittels Schraubverbindungen oder anderer verspannbarer Befestigungselemente. In der entsprechenden Gelenkgabelhälfte 4a beziehungsweise 4b sind dazu Durchgangsöffnungen 24.1a, 24.1b, 24.2a und 24.2b vorgesehen. Durch die komplementären Ausführungen der einzelnen im Außenbereich der Fußteile 5a beziehungsweise 5b angeordneten Verzahnungen 11.1 a, 11.1b beziehungsweise 11.2a, 11.2b und der im Bereich der Gelenkgabelachse zwischen diesen beiden Teilverzahnungen angeordneten weiteren zweiten Verzahnung 20a beziehungsweise 20b wird eine formschlüssige Verbindung zwischen den beiden Gelenkgabelhälften 4a und 4b ermöglicht, welche eine Relativbewegung der beiden Gelenkgabelhälften 4a und 4b zueinander parallel zu einer Ebene, welche durch die Gelenkgabelachse G und einer Senkrechten zur Zapfenachse Z1 des in der Gelenkgabelhälfte 4a beziehungsweise 4b gelagerten Zapfens, welche mit der Zapfenachse der senkrecht zu diesen Zapfen angeordneten Zapfen zusammenfällt, vermieden. Die einzelnen Gelenkgbelhälften erfahren selbst bei Beschädigung der Verzahnungen 11.1a, 11.1b beziehungsweise 11.2a, 11.2b im Außenbereich des Fußteiles 5a beziehungsweise 5b eine Selbstzentrierung, da der Formschluß in der Koppelebene im wesentlichen in zwei Richtungen erfolgt. Die Verspannung der beiden Gelenkgabelhälften 4a und 4b gegeneinander, welche mit entsprechenden Mitteln 23 erfolgt, welche beispielsweise als Befestigungselemente ausgeführt sind, wird auf die beschriebene Art und Weise sehr einfach realisiert. Bei den Befestigungselementen kann es sich dabei um Spannbolzen oder aber auch Schraubverbindungen handeln, wobei in diesem Fall die Durchgangsöffnungen an einer der Gelenkgabelhälften 4a oder 4b mit einem entsprechenden Gewinde versehen sein muß. Die konkrete Ausführung der Mittel zur Verspannung 23 liegt dabei im Ermessen des zuständigen Fachmannes, des weiteren deren Anordnung. Vorzugsweise werden diese jedoch im Bereich geringster Beanspruchung des gesamten Flanschmitnehmers 1 angeordnet. Dieser Bereich entspricht dem Bereich des Fußteiles 5a beziehungsweise 5b, welcher im wesentlichen im Bereich der Gelenkgabelachse G liegt.

Die Figur 1b verdeutlicht anhand einer Seitenansicht den erfindungsgemäß gestalteten Flanschmitnehmer 1 im montierten Zustand, das heißt in Einbaulage. Zu erkennen ist ferner der Wellenstrang 16, welcher mit dem Flanschmitnehmer 1 gekoppelt ist.

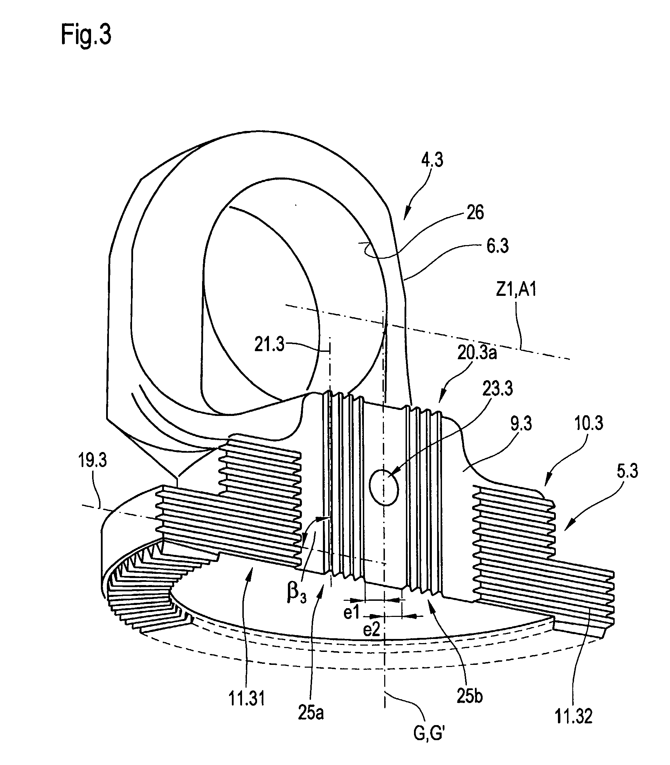

Die Figur 3 verdeutlicht anhand einer Ansicht auf eine Gelenkgabelhälfte 4.3 in perspektivischer Darstellung eine weitere Ausgestaltung der Ausführung der zweiten Verzahnung an der Koppelfläche 9.3 der Gelenkgabelhälfte 4.3. Der Grundaufbau der Gelenkgabelhälfte aus Lagerteil 6.3 und Fußteil 5.3 entspricht im wesentlichen den in den Figuren 1a beschriebenen, weshalb für gleiche Elemente die gleichen Bezugszeichen verwendet werden. Lediglich unterschiedlich ist die Ausführung der zweiten Verzahnung, hier mit 20.3a bezeichnet. Die zweite Verzahnung 20.3a ist hier in zwei Teilverzahnungen 25a und 25b unterteilt. Die beiden Teilverzahnungen sind im Bereich der Gelenkachse G an der Kopffläche 9.3 angeordnet, im dargestellten Fall jeweils in einem Abstand e1 und e2 von der Gelenkachse G beziehungsweise bei Projizierung der Gelenkachse G in die Koppelfläche 9.3 von der projizierten Gelenkgabelachse G'. Auch hier besteht theoretisch die Möglichkeit, daß die beiden Teilverzahnungen 25a und 25b sich bis in den Bereich der ersten Verzahnung 11.3.1 beziehungsweise 11.3.2 erstrecken. Vorzugsweise ist jedoch zwischen beiden in radialer Richtung zur Gelenkgabelachse G hin betrachtet ein Bereich vorgesehen, welcher frei von einer Verzahnung ist. Dies ist insbesondere für die Fertigung der einzelnen Verzahnungselemente von Vorteil. Des weiteren sind auch hier Mittel 23.3 zur Realisierung einer Verspannung zwischen der dargestellten Gelenkgabelhälfte 4.3 und einer hier im einzelnen nicht dargestellten, jedoch an der Koppelfläche mit komplementären Verzahnungen - erster Verzahnung und zweiter Verzahnung ausgeführten Gelenkgabelhälfte vorgesehen. Die Gelenkgabelhälfte 4.3 enthält dazu mindestens eine Durchgangsöffnung 23.3, welche der Führung von Verspannmitteln dient. Auch hier sind beide Verzahnungen - erste Verzahnung 11.3.1, 11.3.2 und zweite Verzahnung 20.3a als gerade Stirnverzahnungen ausgeführt. Die Flankenlinien beziehungsweise deren Verlängerungen verlaufen im wesentlichen senkrecht zueinander. Dargestellt ist es für ein Verzahnungselement anhand einer Flankenlinie 19.3 an der ersten Teilverzahnung 11.3.1 der ersten Verzahnung und der Flankenlinie 21.3 an einem Verzahnungselement der zweiten Verzahnung 20.3a, insbesondere der ersten Teilverzahnung 25a der zweiten Verzahnung 20.3a. Der Winkel zwischen beiden Flankenlinien ist mit β3 angegeben. Auch hier versteht sich, daß die Flankenlinien der ersten Verzahnung in einem Bereich von > 0 bis < 180 Grad zu einer Ebene, welche durch die Gelenkgabelachse und die Zapfenachse Z1 des in der Gelenkgabel gelagerten Zapfens, welche mit der Achse der Lagerbohrung 26 zusammenfällt, verläuft. Das heißt, die Zapfenachse Z1 entspricht dabei der Achse durch die Lagerbohrung A1.

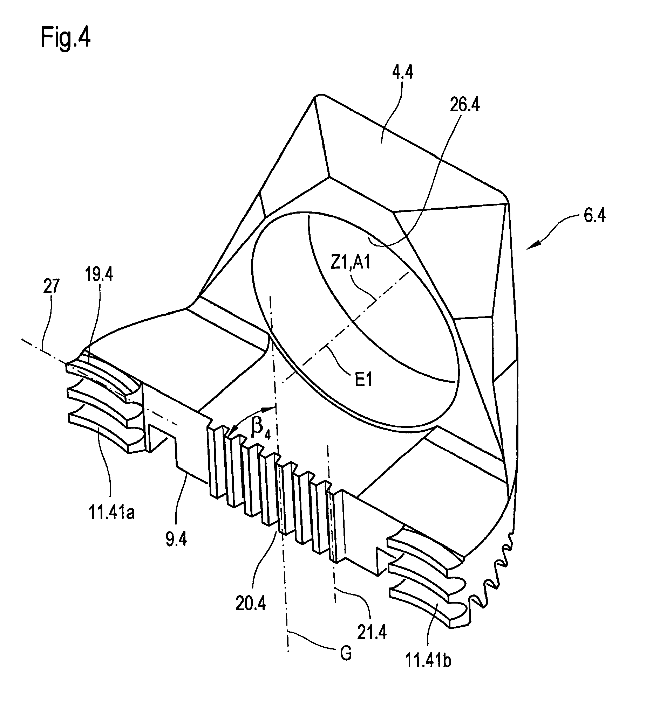

Die Figur 4 verdeutlicht für eine weitere Ausführung eines erfindungsgemäß gestalteten Flanschmitnehmers den Aufbau einer erforderlichen Gelenkgabelhälfte 4.4. Die Ausbildung der ersten Verzahnung, hier 11.4.1a und 11.4.1b in Form einer Bogenverzahnung. Die Flankenlinie für die erste Verzahnung ist hier mit 19.4 an einem Verzahnungselement dargestellt. Die Winkelangabe bezüglich des Verlaufes und Ausrichtung der Bogenverzahnung erfolgt über die Sekante 27 an die Flankenlinie 19.4. Diese verläuft in einem Winkel von β4 = 90 Grad zu einer Ebene E1, welche von der Zapfenachse Z1 des in der Gelenkgabel gelagerten Zapfens, welche der Achse der Lagerbohrung A1 entspricht und der Gelenkgabelachse G gebildet wird. Die Lagerbohrung ist auch hier mit 26.4 bezeichnet, der Lagerteil mit 6.4. Die in der Figur 4 dargestellte Gelenkgabelhälfte 4.4 weist im Bereich der Koppelfläche 9.4 im Bereich der Gelenkgabelachse G eine zweite Verzahnung 20.4 auf. Diese ist als gerade Stirnverzahnung ausgeführt, wobei die Flankenlinien 21.4 parallel zur Gelenkgabelachse G ausgerichtet sind.

Bei den in den Figuren 1, 3 und 4 dargestellten Ausführungen der Gelenkgabelhälfte handelt es sich um Ausführungen, bei denen die Koppelfläche 9 durch eine Ebene beschreibbar ist. Das bedeutet, daß die erste und die zweite Verzahnung jeweils an einer Fläche angeordnet sind. Es ist jedoch auch denkbar, das Fußteil der beiden Gelenkgabelhälften derart komplementär zueinander auszuführen, daß die Koppelfläche durch unterschiedliche Ebenen beschreibbar ist. Im einzelnen besteht dabei die Möglichkeit, die erste Teilverzahnung an Vorsprüngen an der ersten Gelenkgabelhälfte auszubilden und die zweite Verzahnung in einer Ausnehmung, während die dazu komplementär ausgeführte Gelenkgabelhälfte eine Anordnung der ersten Verzahnung in einer Ebene enthält, welche gegenüber der Anordnung der zweiten Verzahnung zurückgesetzt ist. Die zweite Verzahnung an der zweiten komplementären Gelenkgabelhälfte ist dabei an einem Vorsprung am Fußteil angeordnet.

Die in den Figuren 1 bis 4 dargestellten Ausführungen verdeutlichen Ausführungen mit Verzahnungen, deren Flankenlinien senkrecht zueinander angeordnet sind. Denkbar sind jedoch auch Ausführungen, bei denen die Flankenlinien oder die Sekanten durch die Flankenlinien in einem Winkel zwischen 70 und 110 Grad zueinander angeordnet sind.

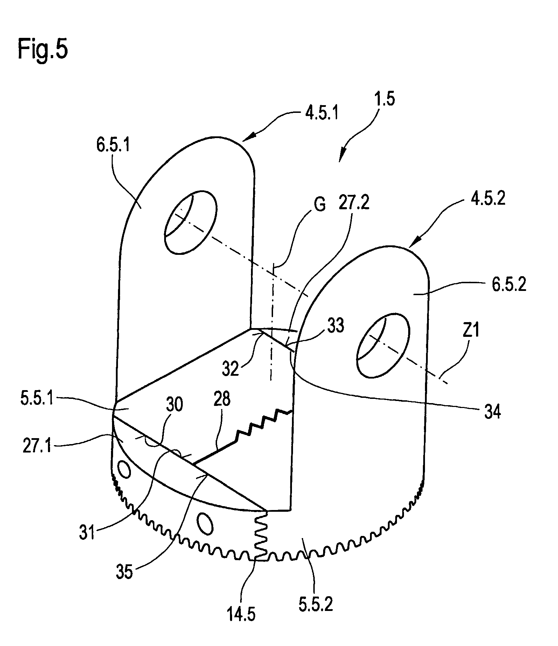

Die Figur 5 zeigt eine weitere Möglichkeit für die Lösung der der Erfindung zugrundeliegenden Aufgabe. Ein Flanschmitnehmer 1.5 umfaßt dabei die beiden Gelenkgabelhälften 4.5.1 und 4.5.2 sowie zwei Segmente 27.1 und 27.2, die gemeinsam mit den beiden Gelenkgabelhälften den Flanschmitnehmer 1.5 bilden.

Der Flanschmitnehmer 1.5 kann als einstückiges Bauteil gegossen werden, wobei auch hier die Gußkontur auf die später gewünschte Kontur des Flanschmitnehmers, vor allem des Fußteiles, abgestimmt wird. Danach erfolgt die Trennung zweier Segmente 27.1 und 27.2 vom Flanschmitnehmer 1.5. Im Anschluß daran erfolgt die Trennung in die zwei Gelenkgabelhälften 4.5.1 und 4.5.2 an der Trennfuge 28. An den in der Trennfuge 28 entstehenden Koppelflächen 9.5.1 und 9.5.2 sind die zueinander komplementären Teilverzahnungen 20.5.1, 20.5.2 der zweiten Verzahnung 20.5 eingearbeitet.

Die Segmente 27.1 und 27.2 werden aus dem Fußteil des einstückigen Flanschmitnehmers abgetrennt. Die Abtrennung erfolgt derart, daß die beiden Lagerteile 6.5.1 und 6.5.2 davon nicht berührt werden. An einer Trennfuge 29.1 bzw. 29.2 zwischen den einzelnen Segmenten 27.1 bzw. 27.2 und den beiden Gelenkgabelhälften 4.5.1 und 4.5.2 entstehen somit die Trennflächen 30, 31 und 32 bzw. 33. Die Trennfläche 30 und 33 werden dabei von den Gelenkgabelhälften 4.5.1 und 4.5.2 gebildet, während die Trennfläche 31 vom Segment 27.1 und die Trennfläche 32 vom Segment 27.2 gebildet wird, wobei die vom Segment gebildeten Flächen auch als Segmentaußenflächen bezeichnet werden. An den Trennflächen sind zueinander komplementäre erste Verzahnungen 34 und 35 vorgesehen, die zur Realisierung einer formschlüssigen Verbindung zwischen den Segmenten 27.1 bzw. 27.2 und den einzelnen Gelenkgabelhälften 4.5.1 bzw. 4.5.2 beitragen. Zusätzlich sind die Segmente 27.2 bzw. 27.2 durch Schraubverbindungen mit den Gelenkgabelhälften 4.5.1 bzw. 4.5.2 verbunden. Zur Verdeutlichung ist hier nur die Anordnung der für die Schraubverbindung vorgesehenen Bohrungen dargestellt. Die Schraubverbindungen dienen lediglich der Erleichterung der Fertigung des Flanschmitnehmers, insbesondere der Fertigung der Hirthstirnverzahnung 14.5 an der Unterseite 12.5 des Flanschmitnehmers 1.5. Zu diesem Zweck werden die beiden Gelenkgabelhälften 4.5.1 bzw. 4.5.2 mit den beiden Segmenten 27.1 bzw. 27.2 formschlüssig über die Verzahnungen 34 bzw. 35 und zusätzlich mittels der Schraubverbindungen verbunden. Die Einarbeitung der Hirthstirnverzahnung 14.5 erfolgt dann an diesem zusammengesetzten Flanschmitnehmer 1.5 an dessen Unterseite 12.5.

Vorzugsweise ist der Flanschmitnehmer 1.5 aus zueinander symmetrisch ausgeführten Teilen aufgebaut, d.h. die beiden Segmentteile 27.1 und 27.2 und Gelenkgabelhälften 4.5.1 und 4.5.2 sind jeweils gegeneinander austauschbar. Beispielsweise kann das Segmentteil 27.1 auch an Stelle des Segmentteiles 27.2 eingesetzt werden.

Die Segmentteile 27.1 und 27.2 sind mittels hier im einzelnen nicht dargestellter Schraubverbindungen mit den Gelenkgabelhälften 4.5.1 und 4.5.2 verbunden.

### Bezugszeichenliste

- 1, 1.2, 1.3, 1.4, 1.5: Flanschmitnehmer
- 2.2: Zapfen
- 3.2: Zapfen
- 4a, 4.2.1, 4.3, 4.4, 4.5.1: erste Gelenkgabelhälfte
- 4b, 4.2.2, 4.5.2: zweite Gelenkgabelhälfte
- 5a, 5.2.1, 5.3, 5.4, 5.5.1: Fußteil der ersten Gelenkgabelhälfte
- 5b, 5.2.2, 5.5.2: Fußteil der zweiten Gelenkgabelhälfte
- 6a, 6.2.1, 6.3, 6.4, 6.5.1: Lagerteil der ersten Gelenkgabelhälfte
- 6b, 6.2.2, 6.5.2: Lagerteil der zweiten Gelenkgabelhälfte
- 7, 7.2: Zapfenkreuz
- 8, 8.2: Flanschteil
- 9a, 9.2.1, 9.3, 9.4, 9.5.1: Koppelfläche der ersten Gelenkgabelhälfte
- 9b, 9.2.2, 9.5.2: Koppelfläche der zweiten Gelenkgabelhälfte
- 10a, 10.2.1, 10.3, 10.4: Außenumfang des Fußteiles der ersten Gelenkgabelhälfte
- 10b, 10.2.2: Außenumfang des Fußteiles der zweiten Gelenkgabelhälfte
- 11.1a, 11.1b, 11.2.1a, 11.2.1b,:
- 11.3.1, 11.3.2, 11.4.1, 11.4.2: erste Verzahnung an der ersten Gelenkgabelhälfte
- 11.2.2a, 11.2.2b: erste Verzahnung an der zweiten Gelenkgabelhälfte
- 12, 12.2, 12.5: Gesamtstirnseite des Flanschteiles
- 12a, 12.2.1, 12.3 12.4: Stirnseite
- 12b, 12.2.2: Stirnseite der zweiten Gelenkgabelhälfte
- 13a, 13.2.1: Mittel zur form- und/oder kraftschlüssigen Verbindung zur Realisierung der Drehmomentübertragung und Verbindung mit einem Anschlußwellenstrang und Zentrierung des Flanschmitnehmers
- 13b, 13.2.2: Mittel zur form- und/oder kraftschlüssigen Verbindung zur Realisierung der Drehmomentübertragung und Verbindung mit einem Anschlußwellenstrang und Zentrierung des Flanschmitnehmers
- 14a, 14b, 14.2, 14.5: Hirth-Stirn-Verzahnung
- 15.2: Schraubverbindung
- 16, 16.2: Wellenstrang
- 17, 17.2: zum Flanschmitnehmer ausgerichtete Stirnseite des Wellenstranges
- 18.1a, 18.1b: Teilbereiche der ersten Koppelfläche an der ersten Gelenkgabelhälfte
- 18.2a, 18.2b: Teilbereich an der Koppelfläche der zweiten Gelenkgabelhälfte
- 19: Flankenlinie der ersten Verzahnung
- 20a, 20.3a, 20.4a: zweite Verzahnung an der ersten Gelenkgabelhälfte
- 20b: zweite Verzahnung an der zweiten Gelenkgabelhälfte
- 21: Flankenlinie der zweiten Verzahnung
- 22: Teilbereich der Koppelfläche
- 23: Mittel zur Verspannung der beiden Gelenkgabelhälften
- 24.1a, 24.1b: Durchgangsöffnungen an der ersten Gelenkgabelhälfte
- 24.2a, 24.2b: Durchgangsöffnungen an der zweiten Gelenkgabelhälfte
- 25a, 25b: Teilverzahnungen der zweiten Verzahnung
- 26: Lagerbohrung
- 27.1; 27.2: Segmente
- 28: Trennfuge
- 29.1, 29.2: Trennfuge
- 30, 33: Trennflächen an den Gelenkgabelhälften
- 31, 32: Segmentaußenflächen
- 34, 35: erste Verzahnung
- F_{U}: Umfangskraft
- A1: Achse der Lagerbohrung
- Z1: Zapfenachse des in der Gelenkgabel gelagerten Zapfens
- G: Gelenkgabelachse
- E1: Ebene
- F_{A}: Kraft
- F_{B}: Kraft

## Patentansprüche

1. Flanschmitnehmer (1; 1.2; 1.3; 1.4) für ein Kardangelenk, insbesondere für den Einsatz in Gelenkwellen;
1.1 mit zwei Gelenkgabelhälften, einer ersten Gelenkgabelhälfte (4a; 4.2.1; 4.3; 4.4) und einer zweiten Gelenkgabelhälfte (4b; 4.2.2);
1.2 jede Gelenkgabelhälfte (4a; 4.2.1; 4.3; 4.4; 4b; 4.2.2) umfaßt einen Fußteil (5a; 5.2.1; 5.3; 5.4; 5b; 5.2.2) und einen Lagerteil (6a, 6b; 6.2.1, 6.2.2; 6.3; 6.4);
1.3 die Gelenkgabelhälften (4a; 4.2.1; 4.3; 4.4; 4b; 4.2.2) sind im Bereich ihres Fußteiles (5a; 5.2.1; 5.3; 5.4; 5b; 5.2.2) formschlüssig miteinander unter Bildung eines Flanschteiles (8; 8.2) aus den einzelnen Fußteilen (5a; 5.2.1; 5.3; 5.4; 5b; 5.2.2) verbindbar;
1.4 die Fußteile (5a; 5.2.1; 5.3; 5.4; 5b; 5.2.2) der Gelenkgabelhälften weisen an ihrer zum Fußteil (5a; 5.2.1; 5.3; 5.4; 5b; 5.2.2) der jeweils anderen Gelenkgabelhälfte (4a; 4b; 4.2.1; 4.2.2; 4.3; 4.4) weisenden Koppelfläche (9a, 9.21, 9.3; 9.4; 9b; 9.2.2) im Bereich des Außenumfanges (10; 10.2.1, 10.3, 10.4, 10b, 10.2.2) eine zueinander komplementäre Verzahnung (11.1a, 11.1b, 11.2.1a, 11.2.1b, 11.3.1, 11.3.2, 11.4.1, 11.4.2, 11.2.2a, 11.2.2b) auf;
1.5 die Verlängerungen mindestens einer Flankenlinie der Verzahnung (11.1a, 11.1b, 11.2.1a, 11.2.1b, 11.3.1, 11.3.2, 11.4.1, 11.4.2, 11.2.2a, 11.2.2b) an der Koppelfläche (9a, 9.21, 9.3; 9.4; 9b; 9.2.2) oder bei einer Bogenverzahnung - die Verlängerung der Sekante durch die Endpunkte der Flankenlinie - bilden einen Winkel von größer als 0 Grad bis kleiner als 180 Grad mit einer Ebene (E1), welche durch die Zapfenachse (Z1) des in einer Gelenkgabelhälfte (4a; 4.2.1; 4.3; 4.4; 4b; 4.2.2) gelagerten Zapfens (2.2) und einer mit einer Rotationsachse des Flanschmitnehmers (1; 1.2; 1.3; 1.4) zusammenfallenden Gelenkgabelachse (G) gebildet wird; **gekennzeichnet durch** die folgenden Merkmale:
1.6 mit jeweils einer an den zueinander weisenden Koppelflächen (9a, 9.2.1, 9.3; 9.4; 9b; 9.2.2) der Fußteile (5a; 5.2.1; 5.3; 5.4; 5b; 5.2.2) im Bereich der Gelenkgabelachse (G) ausgebildeten weiteren zweiten Verzahnung (20a; 20.b; 20.3a, 20.4a, 20.b);
1.7 die Verlängerungen einer oder mehrer Flankenlinien der zweiten Verzahnung (20a, 20b; 20.3a; 20.4a) oder bei Ausführung als Bogenverzahnung - die Verlängerung einer Sekante **durch** die Endpunkte einer Flankenlinie der zweiten Verzahnung - sind in einem Winkel zwischen einschließlich 70 Grad und 110 Grad zur Verlängerung einer Flankenlinie der ersten Verzahnung (11.1a, 11.1b, 11.2.1a, 11.2.1b, 11.3.1, 11.3.2, 11.4.1, 11.4.2, 11.2.2a, 11.2.2b) oder bei Bogenverzahnung zur Verlängerung einer Sekante **durch** die Endpunkte einer Flankenlinie der ersten Verzahnung (11.1a, 11.1b, 11.2.1a, 11.2.1b, 11.3.1, 11.3.2, 11.4.1, 11.4.2, 11.2.2a, 11.2.2b) angeordnet; wobei
1.8 die erste Verzahnung (11.1 a, 11.1 b, 11.2.1a, 11.2.1b, 11.3.1, 11.3.2, 11.4.1, 11.4.2, 11.2.2a, 11.2.2b) und zweite Verzahnung (20a; 20.b; 20.3a, 20.4a, 20.b) jeweils einstückig mit den Gabelhälften (4a; 4.2.1; 4.3; 4.4; 4b; 4.2.2) ausgebildet sind, und jeweils eine Mehrzahl von zwischen den einzelnen Verzahnungen (11.1 a, 11.1 b, 11.2.1 a. 11.2.1 b, 11.3.1, 11.3.2, 11.4.1, 11.4.2, 11.2.2a, 11.2.2b, 20a; 20.b; 20.3a, 20.4a, 20.b) der jeweiligen Gabelhälften (4a; 4.2.1; 4.3; 4.4; 4b; 4.2.2) komplementären Zähne aufweist.

2. Flanschmitnehmer nach Anspruch 1, **dadurch gekennzeichnet, daß** die Koppelfläche (9a, 9b; 9.2.2; 9.2.1, 9.3; 9.4) einer jeden Gelenkgabelhälfte (4a, 4b; 4.2.1, 4.2.2; 4.3, 4.4) durch eine Ebene beschreibbar ist.

3. Flanschmitnehmer (1; 1.2; 1.3; 1.4) nach Anspruch 1, **dadurch gekennzeichnet, daß** die Koppelfläche (9a, 9b; 9.2.2; 9.2.1, 9.3; 9.4) einer jeden Gelenkgabelhälfte (4a, 4b; 4.2.1, 4.2.2; 4.3, 4.4) durch mehrere Ebenen beschreibbar ist.

4. Flanschmitnehmer (1; 1.2; 1.3; 1.4) nach einem der Ansprüche 1 bis 3, **dadurch gekennzeichnet, daß** die Verlängerung der Flankenlinien der ersten Verzahnung (11.1 a, 11.1 b; 11.2.1 a, 11.2.1 b, 11.2.2a, 11.2.2b; 11.3.1, 11.3.2; 11.4.1, 11.4.2) oder bei einer Bogenverzahnung der Sekante durch die Endpunkte der Flankenlinie, senkrecht zu einer Ebene (E1) verläuft, welche durch die Zapfenachse (Z1) des in der Gelenkgabelhälfte (4a, 4b; 4.2.1, 4.2.2) gelagerten Zapfens (2.2, 3.2) und einer mit einer Rotationsachse des Flanschmitnehmers (1; 1.2; 1.3; 1.4) zusammenfallenden Gelenkgabelachse (G) gebildet wird.

5. Flanschmitnehmer (1.5) für ein Kardangelenk, insbesondere für den Einsatz in Gelenkwellen;
5.1 mit zwei Gelenkgabelhälften, einer ersten Gelenkgabelhälfte (4.5.1) und einer zweiten Gelenkgabelhälfte (4.5.2);
5.2 jede Gelenkgabelhälfte (4.5.1, 4.5.2) umfaßt einen Fußteil (5.5.1; 5.5.2) und einen Lagerteil (6.2.1, 6.2.2);
5.3 beide Gelenkgabelhälften (4.5.1, 4.5.2) sind im Bereich ihres Fußteiles (5.5.1, 5.5.2) formschlüssig miteinander unter Bildung eines Flanschteiles (8.5) aus den einzelnen Fußteilen (5.5.1, 5.5.2) verbindbar;
5.4 die Fußteile (5.5.1, 5.5.2) stoßen wenigstens entlang einer zur Zapfenachse (Z1) eines im Flanschmitnehmer (1.5) gestützten ersten Zapfens des Zapfenkreuzes geneigt stehenden Koppelfläche (9.5, 9.5.1, 9.5.2) zusammen;
5.5 es ist wenigstens ein Segmentteil (27.1, 27.2) vorgesehen, das mit den Fußteilen (5.5.1, 5.5.2) beider Gelenkgabelhälften (4.5.1, 4.5.2) zum Flanschteil (8.5) zusammenfassbar ist;
5.6 das einzelne Segmentteil (27.1, 27.2) stößt mit wenigstens einer Segmentaußenfläche (31, 32) an wenigstens einer in einem Winkel zur vom Lagerteil (6.5.1, 6.5.2) weggerichteten Stirnseite (12.5, 12.5.1, 12.5.2) angeordneten Trennfläche (30, 33) der Fußteile (5.5.1, 5.5.2) beider Gelenkgabelhälften (4.5.1, 4.5.2) zusammen;
5.7 die Trennflächen (30, 33) der Fußteile beider Gelenkgabelhälften (4.5.1, 4.5.2) und die Segmentaußenflächen (31, 32) weisen eine zueinander komplementäre erste Verzahnung (30, 33) auf;
5.8 die Verlängerung der Flankenlinien der Verzahnung (30, 33) - oder bei Ausführung als Bogenverzahnung die Verlängerung einer Sekante durch die Endpunkte einer Flankenlinie - verlaufen bei Projizierung in eine gemeinsame Ebene mit einer mit der Rotationsachse des Flanschmitnehmers (8.5) zusammenfallenden Gelenkgabelachse (G) geneigt bzw. in einem Winkel von größer 0° bis kleiner 180° zur Gelenkgabelachse (G); **dadurch gekennzeichnet, daß** die Gelenkgabelhälften
5.9 jeweils eine an den zueinander weisenden Koppelflächen (9.5.1, 9.5.2) der Fußteile (5.5.1, 5.5.2) im Bereich der Gelenkgabelachse (G) ausgebildeten weiteren zweiten Verzahnung (20.5.1, 20.5.2) aufweisen;
5.10 die Verlängerungen einer oder mehrer Flankenlinien der zweiten Verzahnung (20.5.1, 20.5.2) oder bei Ausführung als Bogenverzahnung - die Verlängerung der Sekante durch die Endpunkte einer Flankenlinie der zweiten Verzahnung - ist in einem Winkel zwischen einschließlich 70 Grad und 110 Grad zur Verlängerung einer Flankenlinie der ersten Verzahnung (30.5.1, 30.5.2) oder bei Bogenverzahnung die Verlängerung der Sekante durch die Endpunkte der Flankenlinie der ersten Verzahnung (30.5.1, 30.5.2) und, daß
5.11 die erste Verzahnung (30, 31) und zweite Verzahnung (20.5.1, 20.5.2) jeweils einstückig mit den Gabelhälften (4.5.1, 4.5.2) und den Segmentteilen (27.1, 27.2) ausgebildet sind, und jeweils eine Mehrzahl von zwischen den einzelnen Verzahnungen (30, 31, 20.5.1, 20.5.2) der jeweiligen Gabelhälften (4.5.1, 4.5.2) und Segmentteilen (27.1, 27.2) komplementären Zähne aufweist.

6. Flanschmitnehmer (1; 1.2; 1.3; 1.4; 1.5) nach einem der Ansprüche 1 bis 5, **dadurch gekennzeichnet, daß** an der vom Lagerteil (6a, 6b; 6.2.1, 6.2.2; 6.3; 6.4) wegweisenden Stirnseite (12, 12.2) des Flanschteiles (8; 8.2; 8.5) Mittel zur Kopplung mit komplementären Mitteln an einem Anschlußelement zur Drehmomentenübertragung auf das Anschlußelement (16; 16.2) und zur Zentrierung von Anschlußelement und Flanschmitnehmer (1; 1.2; 1.3; 1.4; 1.5) zur Vermeidung von Relativbewegungen in einer Ebene, die im Koppelbereich zwischen Flanschmitnehmer (1; 1.2; 1.3; 1.4; 1.5) und Anschlußelement (16; 16.2) liegt und senkrecht zur Ebene (E1), welche von der Zapfenachse (Z1) des im Flanschmitnehmer (1; 1.2; 1.3; 1.4; 1.5) gelagerten Zapfens und der mit der Rotationsachse des Flanschmitnehmers zusammenfallenden Gelenkgabelachse (G) gebildet wird, ausgerichtet ist.

7. Flanschmitnhemer (1; 1.2; 1.3; 1.4; 1.5) nach Anspruch 6, **dadurch gekennzeichnet, daß** die Mittel wenigstens eine segmentweise oder über den gesamten Umfang an der an der vom Lagerteil (6a, 6b; 6.2.1, 6.2.2; 6.3; 6.4) wegweisenden Stirnseite (12, 12.2; 12.5) des Flanschteiles (8; 8.2) ausgebildete axial ausgerichtete und in radialer Richtung verlaufende Hirth-Stirn-Verzahnung (14; 14.2; 14.5) umfassen.

8. Flanschmitnehmer (1; 1.2; 1.3; 1.4; 1.5) nach einem der Ansprüche 1 bis 7, **dadurch gekennzeichnet, daß** die Verlängerung der Flankenlinien der zweiten Verzahnung (20a, 20b; 20.3a, 20.4a; 20.5.1, 20.5.2) oder bei einer Bogenverzahnung der Sekante durch die Endpunkte einer Flankenlinie der zweiten Verzahnung (20a, 20b; 20.3a, 20.4a; 20.5.1, 20.5.2) parallel zur Gelenkgabelachse (G) verläuft.

9. Flanschmitnehmer (1; 1.2; 1.3; 1.4; 1.5) nach einem der Ansprüche 1 bis 8, **dadurch gekennzeichnet, daß** zwischen der zweiten Verzahnung (20a, 20b; 20.3a, 20.4a; 20.5.1, 20.5.2) und der ersten Verzahnung (30.5.1, 30.5.2) an der Koppelfläche (9.5.1, 9.5.2) jeweils ein Abstand d bestimmter Größe vorgesehen ist, welcher von einem frei von einer Verzahnung ausgeführten Flächenbereich gebildet wird.

10. Flanschmitnehmer (1.3) nach einem der Ansprüche 1 bis 9, **gekennzeichnet durch** die folgenden Merkmale:
10.1 die zweite Verzahnung (20.3a) an jeder Gelenkgabelhälfte (4.3) umfaßt zwei Teilverzahnungen (25.a, 25.b) - eine erste Teilverzahnung und eine zweite Teilverzahnung -;
10.2 jede der Teilverzahnungen (25.a, 25.b) ist in einem bestimmten Abstand (e) von der in die Koppelfläche (9.3) projizierten Gelenkgabelachse (G) angeordnet.

11. Flanschmitnehmer (1; 1.2; 1.3; 1.4; 1.5) nach einem der Ansprüche 1 bis 10, **dadurch gekennzeichnet, daß** die zweite Verzahnung (20a, 20b; 20.3a, 20.4a; 20.5.1, 20.5.2) als gerade Stirnverzahnung ausgeführt ist.

12. Flanschmitnehmer (1; 1.2; 1.3; 1.4; 1.5) nach einem der Ansprüche 1 bis 11, **dadurch gekennzeichnet, daß** die zweite Verzahnung (20a, 20b; 20.3a, 20.4a; 20.5.1, 20.5.2) als Stirnverzahnung mit einem Winkel zwischen 10 und 60 Grad ausgeführt ist.

13. Flanschmitnehmer (1; 1.2; 1.3; 1.4; 1.5) nach einem der Ansprüche 1 bis 12, **dadurch gekennzeichnet, daß** die zweite Verzahnung (20a, 20b; 20.3a, 20.4a; 20.5.1, 20.5.2) durch eine Teilung im Bereich von einschließlich 8 bis 20 bezogen auf einen Rotationsmesser (D) eines mit dem Flanschmitnehmer (1; 1.2; 1.3; 1.4; 1.5) gekoppelten Wellenstranges (16, 16.2) zwischen einschließlich 500 bis 1000 cm aufweist.

14. Gelenkwelle, umfassend einen Flanschmitnehmer gemäß einem der Ansprüche 1 bis 13.

## Claims

1. A flange driver (1; 1.2; 1.3; 1.4) for a cardan joint, especially for use in universal joint shafts;
1.1 with two joint yoke halves, a first joint yoke half (4a; 4.2.1; 4.3; 4.4) and a second joint yoke half (4b; 4.2.2);
1.2 each joint yoke half (4a; 4.2.1; 4.3; 4.4; 4b; 4.2.2) includes a foot section (5a; 5.2.1; 5.3; 5.4; 5b; 5.2.2) and a bearing part (6a, 6b; 6.2.1, 6.2.2; 6.3; 6.4);
1.3 the joint yoke halves (4a; 4.2.1; 4.3; 4.4; 4b; 4.2.2) can be connected in the region of their foot section (5a; 5.2.1; 5.3; 5.4; 5b; 5.2.2) in an interlocking manner by forming a flange part (8; 8.2) out of the various foot sections (5a; 5.2.1; 5.3; 5.4; 5b; 5.2.2)
1.4 the foot sections (5a; 5.2.1; 5.3; 5.4; 5b; 5.2.2) of the joint yoke halves exhibit at their coupling face (9a, 9.21; 9.3; 9.4; 9b; 9.2.2) facing the foot section (5a; 5.2.1; 5.3; 5.4; 5b; 5.2.2) of the other corresponding joint yoke half (4a; 4b; 4.2,1; 4.2.2; 4.3; 4.4) in the area of the outer periphery (10; 10.2.1, 10.3, 10.4, 10b, 10.2.2) a mutually complementary gearing (11.1a, 11.1b, 11.2.1a, 11.2.1b, 11.3.1, 11.3.2, 11.4.1, 11.4.2, 11.2.2a, 11.2.2b);
1.5 the extensions of at least one flank line of the gearing (11.1a, 11.1b, 11.2.1a, 11.2.1b, 11.3.1, 11.3.2,11.4.1, 11.4.2, 11.2.2a, 11.2.2b) on the coupling face (9a, 9.21, 9.3; 9.4; 9b; 9.2.2) or with a spiral gearing - the extension of the secant through the endpoints of the flank line - form an angle greater than 0 degrees but smaller then 180 degrees with a plane (E1), which is formed by the journal axis (Z1) of the journal (2.2) mounted in a joint yoke half (4a; 4.2.1; 4.3; 4.4; 4b; 4.2.2) and of a joint yoke axis (G) coinciding with a rotational axis of the flange driver (1; 1.2; 1.3; 1.4); **characterised by** the following features:
1.6 each is fitted with one additional second gearing (20a; 20.b; 20.3a, 20.4a, 20.b) formed in the region of the joint yoke axis (G) on the mutually facing coupling faces (9a, 9.2.1, 9.3; 9.4; 9b; 9.2.2) of the foot sections (5a; 5.2.1; 5.3; 5.4; 5b; 5.2.2);
1.7 the extensions of one or several flank lines of the second gearing (20a, 20b; 20.3a; 20.4a) or in a version with a spiral gearing - the extension of a secant through the endpoints of a flank line of the second gearing - are provided in an angle between (inclusive) 70 degrees and 110 degrees for extending a flank line of the first gearing (11.1a, 11.1b, 11.2.1a, 11.2.1b, 11.3, 1.11.3.2, 11.4.1, 11.4.2, 11.2.2a, 11.2.2b) or in case of a spiral gearing for extending a secant through the endpoints of a flank line of the first gearing (11.1a, 11.1b, 11.2.1a, 11.2.1b, 11.3.1, 11.3.2, 11.4.1, 11.4.2, 11.2.2a, 11.2.2b); whereas
1.8 the first gearing (11.1a, 11.1b, 11.2.1a, 11.2.1b, 11.3.1, 11.3.2, 11.4.1, 11.4.2, 11.2.2a, 11.2.2b) and the second gearing (20a; 20.b; 20.3a, 20.4a, 20.b) are each formed integrally with the yoke halves (4a; 4.2.1; 4.3; 4.4; 4b; 4.2.2), and each of them includes a plurality of complementary teeth between the various gearings (11.1a, 11.1b, 11.2.1a. 11.2.1b, 11.3.1. 11.3.2, 11.4,1, 11.4.2,11.2.2a, 11,2.2b. 20a; 20.b; 20.3a, 20.4a, 20.b) of the individual yoke halves (4a; 4.2.1; 4.3; 4.4; 4b; 4.2.2).

2. A flange driver according to claim 1, **characterised in that** the coupling face (9a, 9b; 9.2.2; 9.2.1, 9.3; 9.4) of each joint yoke half (4a, 4b; 4.2.1, 4.2.2; 4.3, 4.4) can be described by a plane.

3. A flange driver (1; 1.2; 1.3; 1.4) according to claim 1, **characterised in that** the coupling face (9a, 9b; 9.2.2; 9.2.1, 9.3; 9.4) of each joint yoke half (4a, 4b; 4.2.1, 4.2.2; 4.3, 4.4) can be described by several planes.

4. A flange driver (1; 1.2; 1.3; 1.4) according to one of the claims 1 to 3, **characterised in that** the extension of the flank lines of the first gearing (11.1a, 11.1b; 11.2.1a, 11.2.1b, 11.2.2a, 11.2.2b; 11.3.1, 11.3.2; 11.4.1, 11.4.2) or in the case of a spiral gearing of the secant through the endpoints of the flank line, runs vertically to a plane (E1), which is formed by the journal axis (Z1) of the journal (2.2, 3.2) mounted in the joint yoke half (4a, 4b; 4.2.1, 4.2.2) and of a joint yoke axis (G) coinciding with a rotational axis of the flange driver (1; 1.2; 1.3; 1.4).

5. A flange driver (1.5) for a cardan joint, especially for use in universal joint shafts;
5.1 with two joint yoke halves, a first joint yoke half (4.5.1) and a second joint yoke half (4.5.2);
5.2 each joint yoke half (4.5.1, 4.5.2) includes a foot section (5.5.1; 5.5.2) and a bearing part (6.2.1, 6.2.2);
5.3 both joint yoke halves (4.5.1, 4.5.2) can be connected in the region of their foot section (5.5.1, 5.5.2) in an interlocking manner by forming a flange part (8.5) out of the individual foot sections (5.5.1, 5.5.2);
5.4 the foot sections (5.5.1, 5.5.2) meet at least along a coupling face (9.5, 9.5.1, 9.5.2) which is tilted to a journal axis (21) of a first journal of the cross joint supported in the flange driver (1.5);
5.5 at least one segmented element (27.1, 27.2) is provided, which can be grouped with the foot sections (5.5.1, 5.5.2) of both joint yoke halves (4.5.1, 4.5.2) to form the flange part (8.5);
5.6 the individual segmented element (27.1, 27.2) meets with at least one segmented external surface (31, 32) on at least one parting surface (30, 33) of the foot sections (5.5.1, 5.5.2) of both joint yoke halves (4.5.1, 4.5.2), said parting surface being arranged at an angle with respect to the front face (12.5, 12.5.1, 12.5.2) facing away from the bearing part (6.5.1, 6.5.2);
5.7 the parting surfaces (30, 33) of the foot sections of both joint yoke halves (4.5.1, 4.5.2) and the segmented external surfaces (31, 32) exhibit a mutually complementary first gearing (30, 33);
5.8 the extension of the flank lines of the gearing (30, 33) - or in a version with a spiral gearing the extension of a secant through the endpoints of a flank line - run when projected in a common plane with a joint yoke axis (G) coinciding with the rotational axis of the flange driver (8.5), tilted or at an angle greater than 0° to smaller than 180° with respect to the joint yoke axis (G); **characterised in that** the joint yoke halves
5.9 each exhibit an additional second gearing (20.5.1, 20.5.2) formed on the mutually facing coupling faces (9.5.1, 9.5.2) of the foot sections (5.5.1, 5.5.2) in the region of the joint yoke axis (G)
5.10 the extensions of one or several flank lines of the second gearing (20.5.1, 20.5.2) or in a version with a spiral gearing - the extension of the secant through the endpoints of a flank line of the second gearing - is at an angle between 70 degrees (inclusive) and 110 degrees for extending a flank line of the first gearing (30.5.1, 30.5.2) or in case of a spiral gearing for extending a secant through the endpoints of a flank line of the first gearing (30.5.1, 30.5.2) and that
5.11 the first gearing (30, 31) and second gearing (20.5.1, 20.5.2) are each formed integrally with the yoke halves (4.5.1, 4.5.2) and the segmented elements (27.1, 27.2) and each of them includes a plurality of complementary teeth between the various gearings (30, 31, 20.5.1, 20.5.2) of the individual yoke halves (4.5.1, 4.5.2) and segmented elements (27.1, 27.2).

6. A flange driver (1; 1.2; 1.3; 1.4; 1.5) according to one of the claims 1 to 5, **characterised in that** the front face (12, 12.2) o the flange part (8; 8.2; 8.5) facing away from the bearing part (6a, 6b; 6.2.1, 6.2.2; 6.3; 6.4) include means for coupling with complementary means to a connection element for rotation torque transmission to the connection element (16; 16.2) and for centring the connection element and flange driver (1; 1.2; 1.3; 1.4; 1.5) for preventing any relative movements on a plane, which lies in the coupling region between flange driver (1; 1.2; 1.3; 1.4; 1.5) and connection element (16; 16.2) and is arranged perpendicular to the plane (E1), which is formed by the journal axis (Z1) of the journal mounted in the flange driver (1; 1.2;1.3; 1.4; 1.5) by the joint yoke axis (G) coinciding with the rotational axis of the flange driver.

7. A flange driver (1; 1.2; 1.3; 1.4; 1.5) according to claim 6, **characterised in that** the means comprise at least one Hirth front gearing (14; 14,2; 14.5) arranged axially in segment or over the whole perimeter on the front face (12, 12.2; 12.5) of the flange part (8; 8.2) facing away from the bearing part (6a, 6b; 6.2.1, 6.2.2; 6.3; 6.4) and extending in radial direction.

8. A flange driver (1; 1.2; 1.3; 1.4; 1.5) according to one of the claims 1 to 7, **characterised in that** the extension of the flank lines of the second gearing (20a, 20b; 20.3a, 20.4a; 20.5.1, 20.5.2) or in the case of a spiral gearing of the secant through the endpoints of the flank line of the second gearing (20a, 20b; 20.3a, 20.4a; 20.5.1, 20.5.2) runs parallel to the joint yoke axis (G).

9. A flange driver (1; 1.2; 1.3; 1.4; 1.5) according to one of the claims 1 to 8, **characterised in that** between the second gearing (20a, 20b; 20.3a, 20.4a; 20.5.1, 20.5.2) and the first gearing (30.5.1, 30.5.2) a distance d of set magnitude is provided on the coupling face (9.5.1, 9.5.2), which is formed by a surface area divested of any gearing.

10. A flange driver (1.3) according to one of the claims 1 to 9, **characterised by** the following features:
10.1 the second gearing (20.3a) on each joint yoke half (4.3) includes two partial gearings (25.a, 25.b) -a first partial gearing and a second partial gearing -;
10.2 each of the partial gearings (25.a, 25.b) is arranged at a set distance (e) from the joint yoke axis (G) projected in the coupling face (9.3).

11. A flange driver (1; 1.2; 1.3; 1.4; 1.5) according to one of the claims 1 to 10, **characterised in that** the second gearing (20a, 20b; 20.3a, 20.4a; 20.5.1, 20.5.2) is designed as a straight front gearing.

12. A flange driver (1; 1.2; 1.3; 1.4; 1.5) according to one of the claims 1 to 11, **characterised in that** the second gearing (20a, 20b; 20.3a, 20.4a; 20.5.1, 20.5.2) is designed as a front gearing with an angle between 10 and 60 degrees.

13. A flange driver (1; 1.2; 1.3; 1.4; 1.5) according to one of the claims 1 to 12, **characterised in that** the second gearing (20a, 20b; 20.3a, 20.4a; 20.5.1, 20.5.2) corresponds to between 500 (inclusive) to 1000 cm by division in the region of 8 (inclusive) to 20 relative to a rotary blade (D) of a shaft train (16, 16.2) coupled with the flange driver (1; 1.2; 1.3; 1.4; 1.5).

14. A cardan shaft, comprising a flange driver according to one of claims 1 to 13.

## Revendications

1. Entraîneur à bride (1; 1.2; 1.3; 1.4) pour articulation à cardan, en particulier pour utilisation dans des arbres articulés;
1.1 pourvu de deux moitiés de fourche d'articulation, une première moitié de fourche d'articulation (4a; 4.2.1; 4.3; 4.4) et une seconde moitié de fourche d'articulation (4b; 4.2.2);
1.2 chaque moitié de fourche d'articulation (4a; 4.2.1; 4.3; 4.4; 4b; 4.2.2) comporte une partie pied (5a; 5.2.1; 5.3; 5.4; 5b; 5.2.2) et une partie palier (6a, 6b; 6.2.1, 6.2.2; 6.3; 6.4);
1.3 les moitiés de fourche d'articulation (4a; 4.2.1; 4.3; 4.4; 4b; 4.2.2) peuvent être connectées dans la zone de leur partie pied (5a; 5.2.1; 5.3; 5.4; 5b; 52.2) par engagement positif et de manière solidaire en formant une partie bride (8; 8.2) à partir des diverses parties pied (5a; 5.2.1; 5.3; 5.4; 5b; 5.2.2)
1.4 les parties pied (5a; 5.2.1; 5.3; 5.4; 5b; 5.2.2) des moitiés de fourche d'articulation présentent au niveau de leur surface d'accouplement (9a, 9.21, 9.3; 9.4; 9b; 9.2.2) dirigée vers la partie pied (5a; 5.2.1; 5.3; 5.4; 5b; 5.2.2) de l'autre moitié de fourche d'articulation correspondante (4a; 4b; 4.2,1; 4.2.2; 4.3; 4.4) dans la zone du périmètre externe (10; 10.2.1, 10.3, 10.4, 10b, 10.2.2) une denture mutuellement complémentaire (11.1a, 11.1b, 11.2.1a, 11.2.1b, 11.3.1,11.3.2, 11.4.1, 11.4.2, 11.2.2a, 11.2.2b);
1.5 les prolongements d'au moins une ligne de flanc de la denture (11.1a, 11.1b, 11.2.1a, 11.2.1b, 11.3.1; 11.3.2, 11.4.1; 11.4.2; 11.2.2a; 11.2.2b) au niveau de la surface d'accouplement (9a, 9.21; 9.3; 9.4; 9b; 9.2.2) ou bien avec une denture spirale - prolongement de la sécante par les points finaux de la ligne de flanc - forment un angle supérieur à 0 degré mais inférieur à 180 degrés avec un plan (E1), qui est constitué par l'axe de tourillon (Z1) du tourillon (2.2) monté dans une moitié de fourche d'articulation (4a; 4.2.1; 4.3; 4.4; 4b; 4.2.2) et d'un axe de fourche d'articulation (G) coïncidant avec un axe de rotation de l'entraîneur à bride (1; 1.2; 1.3; 1.4);'
présentant les caractéristiques suivantes:
1.6 avec toujours une seconde denture supplémentaire (20a; 20.b; 20.3a, 20.4a, 20.b) constituée au niveau des surface d'accouplement (9a, 9.2.1, 9.3; 9.4; 9b; 9.2.2), disposées face à face, des parties pied (5a; 5.2.1; 5.3; 5.4; 5b; 5.2.2) dans la zone de l'axe de fourche d'articulation (G);
1.7 les prolongements d'une ou plusieurs lignes de flanc de la seconde denture (20a, 20b, 20.3a; 20.4) ou dans le cas d'une denture spirale - le prolongement d'une sécante passant par les points finaux d'une ligne de flanc de la seconde denture - forment un angle compris entre 70 degrés (compris) et 110 degrés par rapport au prolongement d'une ligne de flanc de la première denture (11.1a, 11.1b, 11.2.1a, 11.2.1b, 11.3, 1.11.3.2, 11.4. 1,11.4.2, 11.2.2a, 11.2.2b) ou dans le cas d'une denture spirale pour rallonger une sécante passant par les points finaux d'une ligne de flanc de la première denture (11.1a, 11.1b, 11.2.1a, 11.2.1b, 11.3.1, 11.3.2, 11.4.1, 11.4.2, 11.2.2a, 11.2.2b); dans lequel
1.8 la première denture (11.1a, 11.1b, 11.2.1a, 11.2.1b, 11.3.1, 11.3.2, 11.4.1, 11.4.2, 11.2.2a, 11.2.2b) et la seconde denture (20a; 20.b; 20.3a, 20.4a, 20.b) forment chacune un seul bloc avec les moitiés de fourche (4a; 4.2.1; 4.3; 4.4; 4b; 4.2.2), et chacune présente une pluralité de dents complémentaires entre les différentes dentures (11.1a, 11.1b, 11.2.1a. 11.2.1b, 11.3.1. 11.3.2, 11.4, 1, 11.4.2,11.2.2a, 11,2.2b. 20a; 20.b; 20.3a, 20.4a, 20.b) des moitiés de fourche correspondantes (4a; 4.2.1; 4.3; 4.4; 4b; 4.2.2).

2. Entraîneur à bride selon la revendication 1, **caractérisé en ce que** la surface d'accouplement (9a, 9b; 9.2.2; 9.2.1, 9.3; 9.4) de chaque moitié de fourche d'articulation (4a, 4b; 4.2.1, 4.2.2; 4.3, 4.4) est descriptible par un plan.

3. Entraîneur à bride (1; 1.2; 1.3; 1.4) selon la revendication 1, **caractérisé en ce que** la surface d'accouplement (9a, 9b; 9.2.2; 9.2.1, 9.3; 9.4) de chaque moitié de fourche d'articulation (4a, 4b; 4.2.1, 4.2.2; 4.3, 4.4) est descriptible par plusieurs plans.

4. Entraîneur à bride (1; 1.2; 1.3; 1.4) selon l'une quelconque des revendications 1 à 3, **caractérisé en ce que** le prolongement des lignes de flanc de la première denture (11.1a, 11.1b; 11.2.1a, 11.2.1b, 11.2.2a, 11.2.2b; 11.3.1, 11.3.2; 11.4.1, 11.4.2) ou dans le cas d'une denture spirale de la sécante passant par les points finaux de la ligne de flanc, s'étend perpendicuairement à un plan (E1), qui est constitué par l'axe de tourillon (Z1) du tourillon (2.2) monté dans une moitié de fourche d'articulation (4a; 4b; 4.2.1, 4.2.2) et d'un axe de fourche d'articulation (G) coïncidant avec un axe de rotation de l'entraîneur à bride (1; 1.2; 1.3; 1.4).

5. Entraîneur à bride (5) pour articulation à cardan, en particulier pour utilisation dans des arbres articulés;
5.1 pourvu de deux moitiés de fourche d'articulation, une première moitié de fourche d'articulation (4.5.1) et une seconde moitié de fourche d'articulation (4.5.2);
5.2 chaque moitié de fourche d'articulation (4.5.1, 4.5.2) comporte une partie pied (5.5.1; 5.5.2) et une partie palier (6.2.1, 6.2.2);
5.3 les deux moitiés de fourche d'articulation (4.5.1, 4.5.2) peuvent être connectées dans la zone de leur partie pied (5.5.1, 5.5.2) par engagement positif et de manière solidaire en formant une partie bride (8.5) à partir des différentes parties pied (5.5.1, 5.5.2);
5.4 les parties pied (5.5.1, 5.5.2) se recontrent au moins le long d'une surface d'accouplement (9.5, 9.5.1, 9.5.2) inclinée par rapport à l'axe de tourillon (21) d'un premier croisillon maintenu dans l'entraîneur à bride (1.5);
5.5 au moins une partie segmentée (27.1, 27.2) est prévue, qui peut être regroupée avec les parties pied (5.5.1, 5,5.2) des deux moitiés de fourche d'articulation (4.5.1, 4.5.2) pour constituer la partie bride (8.5);
5.6 chaque partie segmentée (27.1, 27.2) rencontre au moins une surface externe segmentée (31,32) au niveau d'une moins une surface de séparation (30, 33) des parties pied (5.5.1, 5.5.2) formant un angle par rapport à la face avant (12.5, 12.5.1, 12.5.2) tournant le dos à la partie palier (6.5.1, 6.5.2);
5.7 les surfaces de séparation (30, 33) des parties pied des deux moitiés de fourche d'articulation (4.5.1, 4.5.2) et les surfaces externes segmentées (31, 32) présentent une première denture mutuellement complémentaire (30, 33);
5.8 le prolongement des lignes de flanc de la denture (30, 33) - ou dans le cas d'une denture spirale, le prolongement d'une sécante passant par les points finaux d'une ligne de flanc - s'étendent en cas de projection dans un plan commun selon un axe de fourche d'articulation (G) coïncidant avec l'axe de rotation de l'entraîneur à bride (8.5), incliné ou formant un angle supérieur à 0° et inférieur à 180° par rapport à l'axe de fourche d'articulation (G); **caractérisé en ce que** les moitiés de fourche d'articulation
5.9 chacune présente une seconde denture (20.5.1, 20.5.2) supplémentaire constituée dans la zone de l'axe de fourche d'articulation (G) au niveau de surfaces d'accouplement disposées face à face (9.5.1, 9.5.2) des parties pied (5.5.1, 5.5.2)
5.10 les prolongements d'une ou plusieurs lignes de flanc de la seconde denture (20.5.1, 20.5.2) ou dans le cas d'une denture spirale - le prolongement de la sécante par les points finaux d'une ligne de flanc de la seconde denture - forment un angle compris entre 70 degrés (compris) et 110 degrés par rapport au prolongement d'une ligne de flanc de la première denture (30.5.1, 30.5.2) ou dans le cas d'une denture spirale, prolongement de la sécante passant par les points finaux de la ligne de flanc de la première denture (30.5.1, 30.5.2) et que
5.11 la première denture (30, 31) et la seconde denture (20.5.1, 20.5.2) forment chacune un seul bloc avec les moitiés de fourche (4.5.1, 4.5.2) et les parties segmentées (27.1, 27.2) et chacune présente une pluralité de dents complémentaires entre les différentes dentures (30, 31, 20.5.1, 20.5.2) des moitiés de fourche correspondantes (4.5.1, 4.5.2) et des parties segmentées (27.1, 27.2).

6. Entraîneur à bride (1; 1.2; 1.3; 1.4; 1.5) selon l'une quelconque des revendications 1 à 5, **caractérisé en ce qu'**au niveau de la face avant (12, 12.2) de la partie bride (8; 8.2; 8.5) tournant le dos à la partie palier (6a, 6b; 6.2.1, 6.2.2; 6.3; 6.4), des moyens d'accouplement avec des moyens complémentaire au niveau d'un élément de connexion pour assurer la transmission du couple de rotation à l'élémennt de connexion (16; 16.2) et pour le centrage de l'élément de connexion et de l'entraîneur à bride (1; 1.2; 1.3; 1.4; 1.5) pour éviter tout mouvement relatif dans un plan situé dans la zone d'accouplement entre l'entraîneur à bride (1; 1.2; 1.3; 1.4; 1.5) et l'élément de connexion (16; 16.2) et perpendiculaire au plan (E1) constitué par l'axe de tourillon (Z1) du tourillon monté dans l'entraîneur à bride (1; 1.2; 1.3; 1.4; 1.5) et l'axe de fourche d'articulation (G) coïncidant avec l'axe de rotation de l'entraîneur à bride.

7. Entraîneur à bride (1; 1.2; 1.3; 1.4; 1.5) selon la revendication 6, **caractérisé en ce que** les moyenscomprennent au moins une denture avant Hirth (14; 14.2; 14.5) s'étendant dans la direction radiale et orientée axialement, formée en segments ou sur tout le périmètre au niveau de la face avant (12, 12.2; 12.5) de la partie bride (8; 8.2) tournant le dos à la partie palier (6a, 6b; 6.2.1, 6.2.2; 6.3; 6.4).

8. Entraîneur à bride (1; 1.2; 1.3; 1.4; 1.5) selon l'une quelconque des revendications 1 à 7, **caractérisé en ce que** le prolongement des lignes de flanc de la seconde denture (20a, 20b; 20.3a, 20.4a; 20.5.1, 20.5.2) ou dans le cas d'une denture spirale de la sécante passant par les points finaux d'une ligne de flanc de la seconde denture (20a, 20b; 20.3a, 20.4a; 20.5.1, 20.5.2) s'étend parallèlement à l'axe de fourche d'articulation (G).

9. Entraîneur à bride (1; 1.2; 1.3; 1.4; 1.5) selon l'une quelconque des revendications 1 à 8, **caractérisé en ce qu'**entre la seconde denture (20a, 20b; 20.3a, 20.4a; 20.5.1, 20.5.2) et la première denture (30.5.1, 30.5.2) est prévu systématiquement une distance d de taille définie au niveau de la surface d'accouplement (9.5.1, 9.5.2), distance constituée d'une zone superficielle exempte de denture.

10. Entraîneur à bride (1.3) selon l'une des revendications 1 à 9, présentant les caractéristiques suivantes:
10.1 la seconde denture (20.3a) au niveau de chaque moitié de fourche d'articulation (4.3) comporte deux dentures partielles (25.a, 25.b) - une première denture partielle et une seconde denture partielle-:
10.2 chacune des dentures partielles (25.a, 25.b) est à une certaine distance (e) de l'axe de fourche d'articulation (G) projetée dans la surface d'accouplement (9.3).

11. Entraîneur à bride (1; 1.2; 1.3; 1.4; 1.5) selon l'une quelconque des revendications 1 à 10, **caractérisé en ce que** la seconde denture (20a, 20b; 20.3a, 20.4a; 20.5,1, 20.5.2) est sous forme de denture frontale droite.

12. Entraîneur à bride (1; 1.2; 1.3; 1.4; 1.5) selon l'une quelconque des revendications 1 à 11, **caractérisé en ce que** la seconde denture (20a, 20b;
20.3a, 20.4a; 20.5.1, 20.5.2) est sous forme de denture frontale avec un angle compris entre 10 et 60 degrés.

13. Entraîneur à bride (1; 1.2; 1.3; 1.4; 1.5) selon l'une quelconque des revendications 1 à 12, **caractérisé en ce que** la seconde denture (20a, 20b; 20.3a, 20.4a; 20.5.1, 20.5.2) présente une division de l'ordre de 8 (compris) à 20 rapportée à une lame rotative (D) d'un arbre de transmission (16, 16.2) couplé à l'entraîneur à bride (1; 1.2; 1.3; 1.4; 1.5) entre 500 (compris) et 1000 cm.

14. Arbre articulé, comprenant un entraîneur à bride selon l'une des revendications 1 à 13.
